# EUROPEAN PATENT SPECIFICATION

(11) **EP 3 656 154 B1**
(45) Date of publication and mention of the grant of the patent: **14.06.2023**
(21) Application number: 18835003.7
(22) Date of filing: 28.06.2018
(51) Int. Cl.: H04W 76/15, H04W 76/11, H04W 76/20, H04W 76/38, H04W 88/16

(54) **METHODS, APPARATUSES AND NON-TRANSITORY COMPUTER-READABLE STORAGE MEDIUM FOR QUALITY OF SERVICE DIFFERENTIATION VIA A TRUSTED WIRELESS LOCAL AREA NETWORK**
VERFAHREN, VORRICHTUNGEN UND NICHTTRANSITORISCHES COMPUTERLESBARES SPEICHERMEDIUM ZUR DIFFERENZIERUNG VON DIENSTGÜTE ÜBER EIN VERTRAUENSWÜRDIGES DRAHTLOSES LOKALES NETZWERK
PROCÉDÉS, APPAREILS ET SUPPORT DE STOCKAGE LISIBLE PAR ORDINATEUR NON TRANSITOIRE DE DIFFÉRENCIATION DE QUALITÉ DE SERVICE VIA UN RÉSEAU LOCAL SANS FIL DE CONFIANCE

(30) Priority: 19.07.2017 US 201762534355 P
(43) Date of publication of application: 27.05.2020
(73) Proprietor: Nokia of America Corporation, Murray Hill, NJ 07974-0636 (US)
(72) Inventor: LIU, Jennifer, Plano Texas 75025 (US)
(74) Representative: TBK
(86) International application number: PCT/US2018/040017
(87) International publication number: WO 2019/018113

(56) References cited:
- EP-A1- 2 800 417
- WO-A1-2015/042389
- US-A1- 2001 025 310
- US-A1- 2015 009 826
- US-A1- 2016 227 467
- US-A1- 2017 034 749
- US-A1- 2017 070 921
- US-A1- 2017 111 826
- US-B1- 6 640 248
- "3rd Generation Partnership Project; Technical Specification Group Services and System Aspects; Study on Support of voice over WLAN; Enhancements (Release 15)", 3GPP STANDARD ; TECHNICAL REPORT ; 3GPP TR 23.751, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.0.0, 12 June 2017 (2017-06-12), pages 1-26, XP051298398, [retrieved on 2017-06-12]
- NOKIA ET AL: "New Key Issues on QoS differentiation in the user plane", 3GPP DRAFT; S2-166026 WAS5952_23751_VOWLAN_KI UP QOS DIFFERENTIATION_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. SA WG2, no. Kaohsiung City, Taiwan; 20161017 - 20161021 24 October 2016 (2016-10-24), XP051170000, Retrieved from the Internet: URL:http://www.3gpp.org/ftp/tsg_sa/WG2_Arc h/TSGS2_117_Kaohsiung_City/Docs/ [retrieved on 2016-10-24]

## Description

### BACKGROUND

When user equipment (UE), such as a mobile device, accesses an evolved packet core (EPC) core network via 3GPP access, end to end QoS differentiation is supported via EPS bearer services. Both the E-RAB Radio Access bearer between the UE and the serving gateway of the EPC (SGW), and Core Network S5/S8 bearer between the SGW and packet data network gateway (PDN-GW) are established with specified quality of service (QoS) characteristics and a mapping of a QoS Class Index (QCI) that describes the type of service (data traffic) expected for the bearer (e.g., signaling, conversational voice, streaming video, best effort, etc.). The QCI also defines the traffic performance and QoS forwarding behavior (e.g. packet loss rate, maximum delay, residual error rate, etc.). In contrast, when UE accesses the EPC via a trusted wireless local area network (WLAN) access, end to end QoS differentiation cannot be provided.

Although QoS differentiation support is possible for a Core Network S2a bearer between a trusted wireless access gateway (TWAG) and the PDN-GW of the core network, when TSCM connection mode or SCM connection mode is used, QoS differentiation cannot be supported since these are single connection modes. When MCM (multi-connection mode) is used, multiple packet data network (PDN) connections may be supported, yet differentiated treatments towards service data flows (SDFs) cannot be achieved because all service data flows (data traffic) are transported via a single point-to-point link between an UE and its serving TWAG for the PDN connection, thus distinction of different service data flows within a PDN connection is not possible. A wireless LAN control plane (WLCP) protocol extension for the over the air (SWw) interface is required in order to enable QoS signaling for QoS differentiation at the service data flow level in order to provide end to end QoS differentiation.

The issue of QoS differentiation for trusted WLAN is addressed/discussed in the document 3GPP TR 23.751, V15.0.0 (2017-06), XP051298398, and in the 3GPP document S2-166026 entitled "New Key Issues on QoS differentiation in the user plane" by Nokia et al., XP051170000. Further related art is known from the the document WO 2015/042389 A1 relating to mobile network operator (MNO) control of WiFi QoS based on traffic detection and DSCP mapping in trusted WLAN access and networks, the document EP 2 800 417 A1 relating to end-to-end QoS over a Trusted non-3GPP Access Network, when integrating Trusted non-3GPP Access Networks and 3GPP Core Networks, and the document US 2016/227467 A1 relating to mobile wireless network operator control of WLAN QoS via ANDSF.

### BRIEF SUMMARY

Methods, apparatuses, and a non-transitory computer-readable storage medium are provided in accordance with example embodiments in order to support QoS signaling over SWw Trusted WLAN Access for the UEs in Multi-Connection Mode (MCM), thus enabling the end to end QoS differentiation for service data flows.
Various aspects of the present disclosure are set out in the appended claims.
The scope of protection sought for the present invention is set out by the independent claims. The embodiments and/or examples and features, if any, described in this specification that do not fall under the scope of the independent claims are to be interpreted as examples useful for understanding various embodiments of the present disclosure.

In one embodiment, a method of a trusted wireless local area network access gateway for quality of service (QoS) differentiation as according to claim 1 is provided.

In one example embodiment, an apparatus of a trusted wireless local area network access gateway for quality of service (QoS) differentiation as according to claim 9 is provided.

In another embodiment, a method of a user equipment for quality of service (QoS) differentiation as according to claim 10 is provided.

In one example embodiment, an apparatus of a user equipment for quality of service (QoS) differentiation as according to claim 16 is provided.

In a further embodiment, a non-transitory computer-readable storage medium as according to claim 17 is provided.

### BRIEF DESCRIPTION OF THE DRAWINGS

Having thus described certain example embodiments of the invention in general terms, reference will now be made to the accompanying drawings, which are not necessarily drawn to scale, and wherein:
Figure 1 is an exemplary networked system in accordance with an example embodiment of the present disclosure;
Figure 2 is a block diagram of an user equipment apparatus configured in accordance with an example embodiment of the present disclosure;
Figure 3 is a block diagram of a trusted wireless local area network apparatus configured in accordance with an example embodiment of the present disclosure;
Figure 4 illustrates an example state machine of the UE of the networked system shown in Figure 1 in accordance with an example embodiment of the present disclosure;
Figure 5 illustrates an example state machine of the trusted wireless access gateway (TWAG) of the networked system shown in Figure 1 in accordance with an example embodiment of the present disclosure;
Figures 6A-6C illustrate end point flow diagrams for UE and TWAG PDN connectivity negotiation;
Figures 7A-7B illustrate end point flow diagrams for WLCP bearer setup;
Figures 8A-8C illustrate end point flow diagrams for WLCP bearer modify requests;
Figures 9A-9B illustrate end point flow diagrams for WLCP bearer release requests;
Figure 10 is a flowchart illustrating the QoS differentiation in accordance with an example embodiment of the present disclosure; and
Figure 11 is a flowchart illustrating the QoS differentiation in accordance with another example embodiment of the present disclosure.

### DETAILED DESCRIPTION

Some embodiments of the present invention will now be described more fully hereinafter with reference to the accompanying drawings. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a WLAN including a TWAG), field programmable gate array, and/or other computing device.

As defined herein, a "computer-readable storage medium," which refers to a physical storage medium (e.g., volatile or non-volatile memory device), may be differentiated from a "computer-readable transmission medium," which refers to an electromagnetic signal.

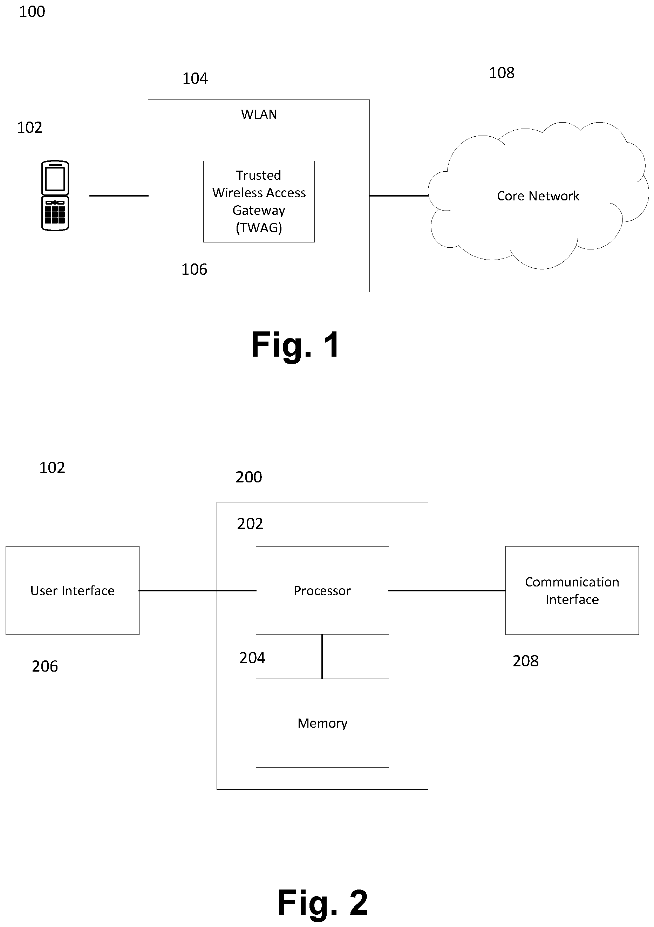

Methods, apparatuses and a non-transitory computer-readable storage medium are provided in accordance with example embodiments to provide QoS differentiation as described herein. Figure 1 is an exemplary networked system 100 in accordance with an example embodiment of the present disclosure. Figure 1 specifically illustrates User Equipment (UE) 102, which may be in communication with a trusted Wireless Local Area Network (WLAN) 104. The WLAN 104 may in turn be in communication with a core network 108. Various methods including the use of an Proxy AAA and a 3GPP AAA server may be utilized by the WLAN 104 and the core network 108.

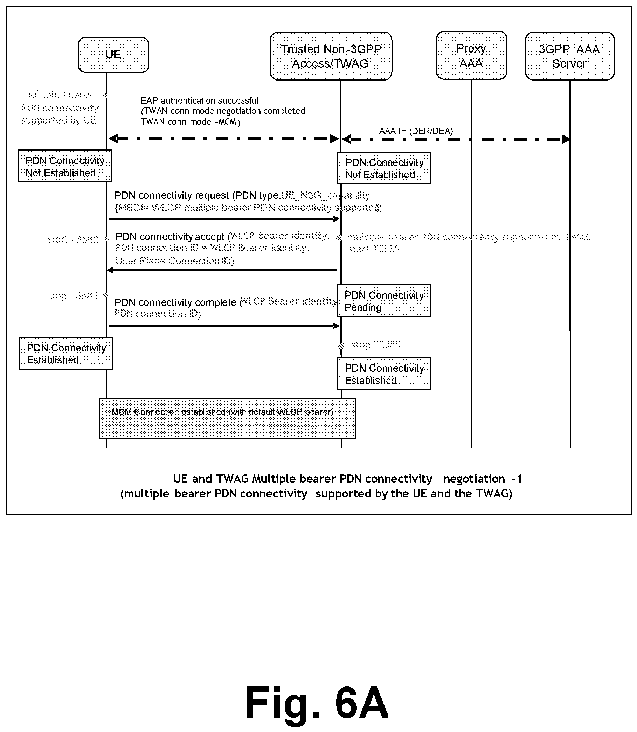

Examples of an UE apparatus (UE 102) are configured in accordance with an example embodiments of the present disclosure are depicted in Figure 2. As described below in conjunction with the flowcharts of Figures 6A-11, the UE 102 of an example embodiment may be configured to perform the functions described herein. In any instance, the apparatus may more generally be embodied by a computing device, such as a server, a personal computer, a computer workstation or other type of computing device including those functioning as an user equipment and/or a wireless local area network. Regardless of the manner in which the UE 102 is embodied, the apparatus of an example embodiment may be configured as shown in Figure 2 so as to include, be associated with or otherwise be in communication with processing circuitry 200 including, for example, a processor 202 and a memory 204 and, in some embodiments, a communication interface 208 and/or a user interface 206.

In the processing circuitry 200, the processor 202 (and/or co-processors or any other circuitry assisting or otherwise associated with the processor) may be in communication with the memory device 204 via a bus for passing information among components of the UE 102. The memory device may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The UE 102 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present disclosure while configured accordingly. Thus, for example, when the processor is embodied as an ASIC, FPGA or the like, the processor may be specifically configured hardware for conducting the operations described herein. Alternatively, as another example, when the processor is embodied as an executor of instructions, the instructions may specifically configure the processor to perform the algorithms and/or operations described herein when the instructions are executed. However, in some cases, the processor may be a processor of a specific device (e.g., an encoder and/or a decoder) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

In embodiments that include a communication interface 208, the communication interface may be any means such as a device or circuitry embodied in either hardware or a combination of hardware and software that is configured to receive and/or transmit data from/to a network and/or any other device or module in communication with the UE 102, such as an WLAN, Core network, a database or other storage device, etc. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

In some embodiments, the UE 102 may include a user interface 206 that may, in turn, be in communication with the processing circuitry 202 to receive an indication of a user input and/or to cause presentation of visual representations of the functions described herein, or the data traffic flow described. As such, the user interface may include, for example, a keyboard, a mouse, a joystick, a display, a touch screen(s), touch areas, soft keys, a microphone, a speaker, or other input/output mechanisms. Alternatively or additionally, the processor 202 may comprise user interface circuitry configured to control at least some functions of one or more user interface elements such as, for example, a speaker, ringer, microphone, display, and/or the like. The processor and/or user interface circuitry comprising the processor may be configured to control one or more functions of one or more user interface elements through computer program instructions (e.g., software and/or firmware) stored on a memory accessible to the processor (e.g., memory device 204, and/or the like).

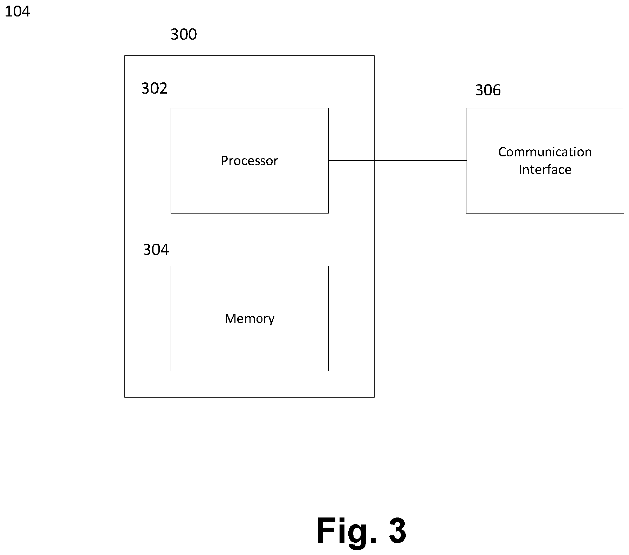

Examples of a WLAN apparatus (including WLAN 104) as configured in accordance with example embodiments of the present disclosure are depicted in Figure 3. As described below in conjunction with the flowcharts of Figures 6A-11, the WLAN 104 of an example embodiment may be configured to perform the functions described herein. In any instance, the WLAN 104 may more generally be embodied by a computing device, such as a server, a personal computer, a computer workstation or other type of computing device including those functioning as an user equipment and/or a wireless local area network. Regardless of the manner in which the WLAN 104 is embodied, the apparatus of an example embodiment may be configured as shown in Figure 3 so as to include, be associated with or otherwise be in communication with processing circuitry 300 including, for example, a processor 302 and a memory 304 and, in some embodiments, and/or a communication interface 306.

In the processing circuitry 300, the processor 302 (and/or co-processors or any other circuitry assisting or otherwise associated with the processor) may be in communication with the memory device 304 via a bus for passing information among components of the WLAN 104. The memory device may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The WLAN 104 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 302 may be embodied in a number of different ways. For example, the processor may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 302 may be configured to execute instructions stored in the memory device 304 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present disclosure while configured accordingly. Thus, for example, when the processor is embodied as an ASIC, FPGA or the like, the processor may be specifically configured hardware for conducting the operations described herein. Alternatively, as another example, when the processor is embodied as an executor of instructions, the instructions may specifically configure the processor to perform the algorithms and/or operations described herein when the instructions are executed. However, in some cases, the processor may be a processor of a specific device (e.g., an encoder and/or a decoder) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

In embodiments that include a communication interface 306, the communication interface may be any means such as a device or circuitry embodied in either hardware or a combination of hardware and software that is configured to receive and/or transmit data from/to a network and/or any other device or module in communication with the WLAN 104, such as UE, Core network, a database or other storage device, etc. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

As part of EAP-AKA' authentication via the WLAN 104, the UE 102 and the WLAN 104 first negotiates a trusted wireless network connection mode usage. If Multi-Connection mode (MCM) is selected, the UE 102 establishes a DTLS connection with the TWAG 106 and initiates WLCP procedures. During PDN connection establishment, the UE 102 indicates to the TWAG whether WLCP multiple bearer PDN connectivity capability is supported. If the UE 102 does not indicate that WLCP multiple bearer PDN connectivity is supported, or if the UE 102 indicates that WLCP multiple bearer PDN connectivity is supported but the TWAG does not support WLCP multiple bearer PDN connectivity, then QoS differentiation is not supported. In this instance, single point-to-point PDN connection is used to carry all S2a bearers traffic between the UE 102 and TWAG 106. If WLCP multiple bearer PDN connectivity is supported by both the UE 102 and WLAN 104, then QoS differentiation is supported and multiple bearer PDN connectivity is used between the UE 102 and TWAG. During PDN connection establishment, the TWAG, using processor 302 and memory 304, establishes a default WLCP bearer for the PDN connection. The default WLCP bearer remains established throughout the lifetime of the PDN connection. The TWAG, using processor 302 and memory 304, establishes a separate WLCP bearer for each additional S2a dedicated bearer of the PDN connection. Each WLCP bearer is associated with TFT and bearer level QoS (i.e. QCI, GBR and MBR) for one-to-one mapping between a WLCP bearer and a S2a bearer. The TWAG, using processor 302 and memory 304, maintains the WLCP bearer to the S2a bearer mapping table.

After a WLCP multiple bearer PDN connectivity is established between the UE 102 and the TWAG 106, for uplink packets, the UE 102, using processor 202 and memory 204, selects a WLCP bearer based on the uplink packet filters in the TFTs. If no match is found, the UE 102 selects the WLCP bearer that does not have any uplink packet filter assigned. If all bearers have been assigned an uplink packet filter, the UE 102 using processor 202, discards the uplink data packet. The UE 102 then uses the QCI in WLCP bearer level QoS information to derive a DSCP value for uplink packets. The DSCP value is used to determine the WLAN 802.11 QoS class, user priority and EDCA Access Category over the radio SWw. The TWAG 106 then routes the uplink packets to the corresponding S2a bearers based on the WLCP bearer and the S2a bearer mapping table, which may be stored in memory 304. In some embodiments, UE 102 may map QoS/QCI to DSCP value, for example, by using the recommended mappings between standardized QCIs and Release 99 QoS parameter value, or the mapping specified in IEEE Std. 802.11-2012.

In some examples, for downlink packets, a PDN-GW routes the packets to S2a bearers based on the downlink packet filters in the TFTs assigned to each of the S2a bearers. The TWAG 106 then selects the corresponding WLCP bearer for the downlink packets based on the WLCP bearer and the S2a bearer mapping table. The TWAG 106 may also use the QCI in WLCP bearer level QoS information to derive the DSCP value for uplink packets. The DSCP value is then used to determine the WLAN 802.11 QoS class, user priority and EDCA Access Category over the radio SWw. In some examples, the TWAG, using processor 302 and memory 304, can map QoS/QCI to DSCP value, for example, by using the recommended mappings between standardized QCIs and Release 99 QoS parameter value, or the mapping specified in IEEE Std. 802.11-2012. The operations provide end-to-end QoS differentiation from the core network 108 to the UE 102.

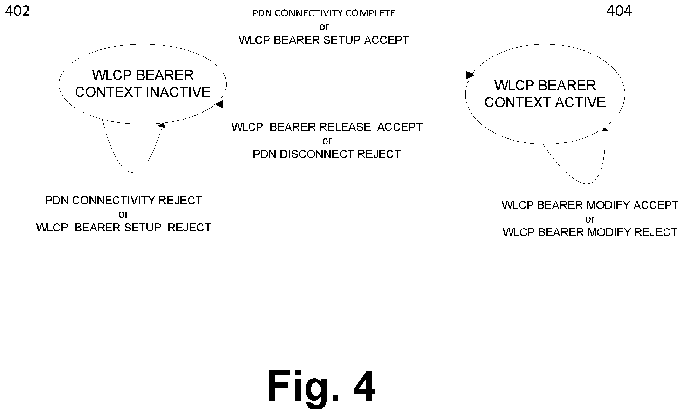

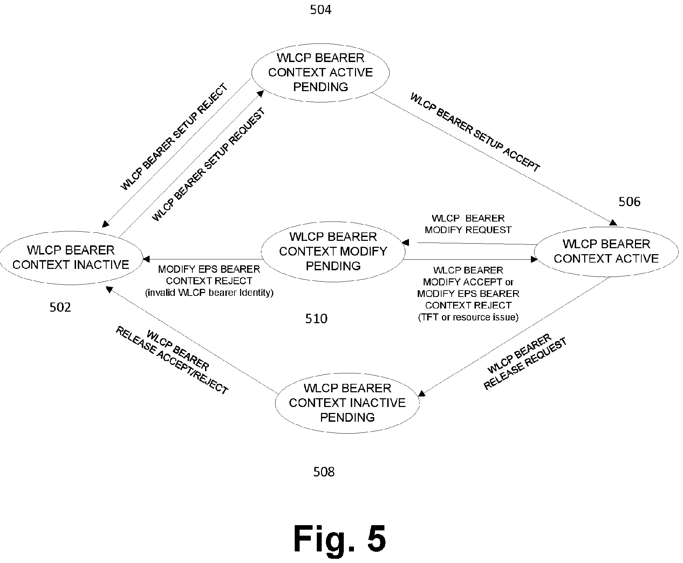

Turning now to Figures 4 and 5, which illustrates example state machines of the networked system shown in Figure 1. More specifically, Figure 4 illustrates the UE 102 WLCP layer states, which support QoS signalling and additional bearer level states for WLCP bearer in the UE 102, when multiple bearer PDN connectivity model is used. In some examples, each WLCP bearer context is associated with an individual state machine such as the state machine shown in Figure 4. This state machine is utilized when both the UE 102 and the TWAG 106 support the establishment of multiple WLCP bearers per PDN connection. A separate WLCP bearer is established for the default S2a bearer, and for each dedicated S2a bearer established on the S2a interface. The WLCP sublayer bearer level states in the UE 102 are shown as state 402 and state 404 in Figure 4. State 402 includes WLCP BEARER INACTIVE, in which no WLCP bearer context exists. State 404 includes WLCP BEARER ACTIVE, in which the WLCP bearer context is active in the UE 102.

Figure 5 illustrates TWAG 106 WLCP layer states, which support QoS signalling and additional bearer level states for WLCP bearer in the TWAG 106 when a multiple bearer PDN connectivity model is used. State 502 includes WLCP BEARER INACTIVE, in which no WLCP bearer context exists for the UE 102. State 504 includes WLCP BEARER ACTIVE PENDING in which the TWAG 106 has initiated a WLCP bearer context setup towards the UE 102. State 506 includes WLCP BEARER ACTIVE in which the WLCP bearer context is active in the TWAG. State 508 includes WLCP BEARER INACTIVE PENDING, in which the TWAG 106 has initiated a WLCP bearer context release towards the UE 102. State 510 includes WLCP BEARER MODIFY PENDING in which the TWAG 106 has initiated a WLCP bearer context modification towards the UE 102.

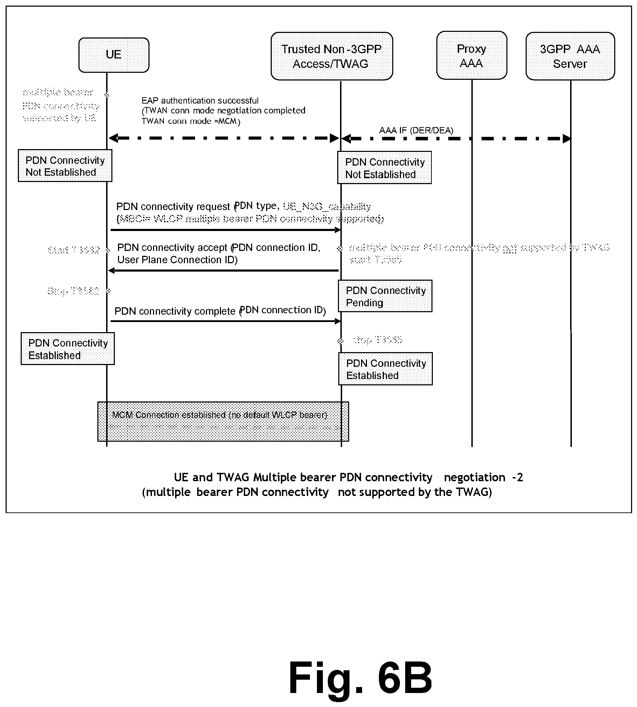

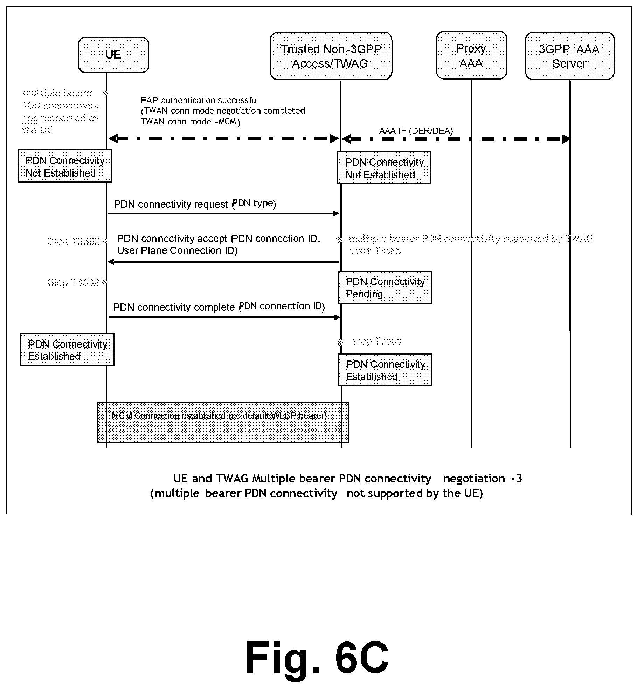

Figures 6A-6C illustrate end point flow diagrams for UE and TWAG PDN connectivity negotiation. During PDN connection establishment as shown in Figures 6A-6C, if the UE 102 supports multiple bearer PDN connectivity, the UE 102 sets the multiple bearer capability indicator bit to "WLCP multiple bearer PDN connectivity supported" in the UE 102 N3G capability IE in the PDN CONNECTIVITY REQUEST message as shown in Table 1 and Table 2 below. Figure 6A shows message sequence and UE 102 side state changes, as shown in Figure 4, involved when multiple bearer PDN connectivity is supported by both the UE 102 and the TWAG, as an example underlying the invention. In this instance, PDN connection is established with default WLCP bearer and PDN connection ID is set to be the same as the WLCP bearer Identity. Figure 6B shows message sequence and UE 102 side state changes involved in the capability negotiation when multiple bearer PDN connectivity is supported by the UE 102 but not supported by the TWAG, as an example useful for understanding the invention. In this case PDN connection is established without default WLCP bearer (e.g., no bearer level support). Figure 6C shows message sequence and UE 102 side state changes involved when multiple bearer PDN connectivity is not supported by the UE 102, as an example useful for understanding the invention. In this case, capability negotiation is not initiated and PDN connection is established without default the WLCP bearer (no bearer level support).

Table 1 illustrates PDN Connectivity Request message. This message is sent by the UE 102 to the TWAG 106 to initiate establishment of a PDN connection.

**Table 1: PDN CONNECTIVITY REQUEST message content**

| **IEI** | **Information Element** | **Type/Reference** | **Presence** | **Format** | **Length** |
|---|---|---|---|---|---|
| | PDN connectivity request message identity | Message type | M | V | 1 |
| | | 8.2 | | | |
| | Request type | Request type | M | V | 1/2 |
| | | 8.4 | | | |
| | PDN type | PDN type | M | V | 1/2 |
| | | 8.5 | | | |
| xx | UE N3G capability | UE N3G capability | O | TV | 1 |
| | | 8.x | | | |
| 28 | Access point name | Access point name | O | TLV | 3-102 |
| | | 8.6 | | | |

The UE 102 includes this information element (IE) to indicate UE capabilities related to non-3GPP access when the UE 102 is accessing EPC via trusted non-3GPP access during the PDN connection establishment procedure.

Table 2 illustrates UE N3G capability. The purpose of the UE 102 N3G capability information element is to provide the WLAN 104 with information concerning aspects of the UE 102 capabilities related to trusted non-3GPP access. The contents of UE N3G capability may affect the manner in which the WLAN 104 handles the operation of the UE 102. The UE 102 N3G capability is a type 3 information element and coded as shown in Table 2.

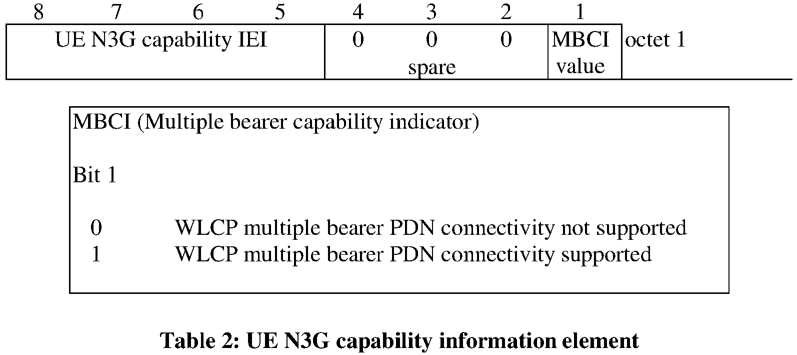

Referring back to Figures 6A-6C. If the requested PDN connection can be established, the TWAG 106 sends a PDN CONNECTIVITY ACCEPT message towards the UE 102. The TWAG 106, then retrieves a PTI from the PDN CONNECTIVITY REQUEST message and includes it in a PDN CONNECTIVITY ACCEPT message. If the request type is different from "emergency" and from "handover of emergency bearer services", both the network identifier part and the operator identifier part are included in the Access Point Name IE.

Additionally, the TWAG 106 proceeds as shown in Figures 6A-6C. If the UE 102 indicated support of multiple bearer PDN connectivity capability in the received PDN CONNECTIVITY REQUEST message and the TWAG 106 also supports multiple bearer PDN connectivity feature, the TWAG selects to use a Multiple bearer PDN connectivity model. The TWAG 106 then includes a WLCP bearer identity in the PDN CONNECTIVITY ACCEPT message. The TWAG 106 then assigns a WLCP bearer identity using a value that has not yet been assigned to the UE 102. The WLCP bearer identity is used to identify the default WLCP bearer associated with the established PDN connection between the UE 102 and the TWAG 106. The TWAG 106 also includes a PDN connection ID in the message. The TWAG 106 sets PDN connection ID to the same value as the assigned default WLCP bearer identity. The PDN connection ID is used to identify the PDN connection between the UE 102 and the TWAG. The message also includes a user plane connection ID. The TWAG 106 sets the user plane connection ID to the MAC address of the TWAG 106. This MAC address is used by the UE 102 and the TWAG 106 to send the user plane packets for the default WLCP bearer established for this PDN connection.

Otherwise and not according to the invention, if the UE 102 did not indicate support of multiple bearer PDN connectivity capability in the received PDN CONNECTIVITY REQUEST message or if the UE 102 indicated support of multiple bearer PDN connectivity capability but the TWAG 106 does not support multiple bearer PDN connectivity feature, the TWAG 106 selects to use a Single point-to-point connectivity model. The TWAG 106 then assigns a PDN connection ID and include in the PDN CONNECTIVITY ACCEPT message. The message includes a PDN connection ID to identify the PDN connection between the UE 102 and the TWAG 106 and MAC address of the TWAG to the UE 102. This MAC address is used by the UE 102 and the TWAG to send the user plane packets for this PDN connection.

Table 3 illustrates a PDN Connectivity Accept message according to example embodiments. The message illustrated is sent by the WLAN 104 to the UE 102 to acknowledge activation of a PDN connection.

**Table 3: PDN CONNECTIVITY ACCEPT message content**

| **IEI** | **Information Element** | **Type/Reference** | **Presence** | **Format** | **Length** |
|---|---|---|---|---|---|
| | PDN connectivity accept message identity | Message type | M | V | 1 |
| | | 8.2 | | | |
| | Procedure transaction identity | Transaction identifier | M | V | 1 |
| | | 8.3 | | | |
| | Access point name | Access point name | M | LV | 2-101 |
| | | 8.6 | | | |
| | PDN Address | PDN address | M | LV | 6-14 |
| | | 8.8 | | | |
| | PDN connection ID | PDN connection ID | M | V | 1 |
| | | 8.9 | | | |
| | User Plane Connection ID | User Plane Connection ID | M | V | 6 |
| | | 8.10 | | | |
| xx | WLCP Bearer identity | WLCP bearer identity | O | TV | 2 |
| | | 8.y | | | |
| 58 | Cause | Cause | O | TV | 2 |
| | | 8.11 | | | |
| | .... | | | | |

In some examples, the TWAG 106 includes this IE if multiple bearer PDN connectivity is used and the TWAG 106 has assigned a WLCP bearer identity for the default WLCP bearer of the newly activated PDN connection.

Table 4 illustrates a WLCP bearer identity Information element according to example embodiments. The WLCP bearer identity IE identifies a WLCP bearer (default or dedicated) with which one or more packet filters specified in a traffic flow aggregate are associated. The WLCP bearer identity information element is coded as shown in Table 4. In some examples, the WLCP bearer identity is a type 3 information element.

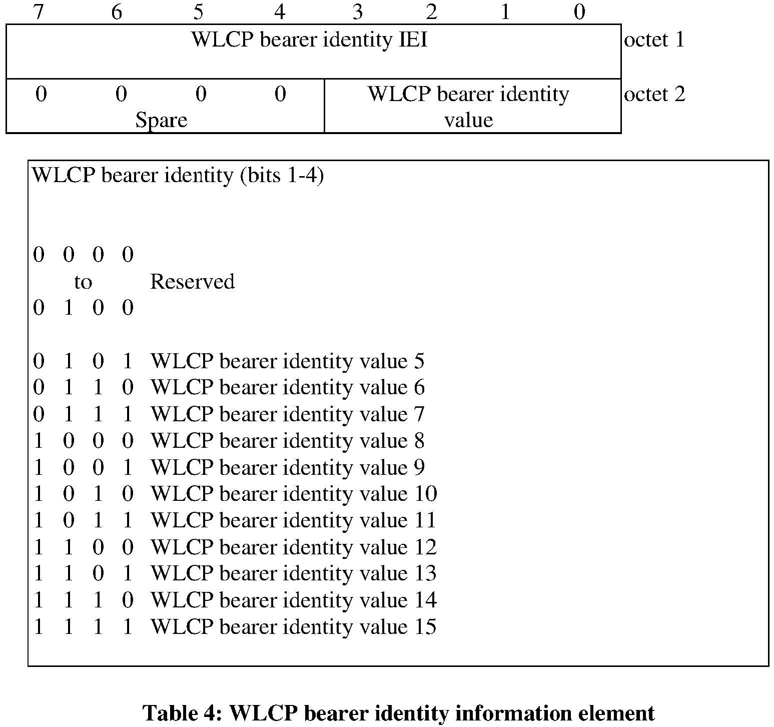

Table 5 illustrates a PDN Connectivity Complete message according to an example embodiment. In some examples, This message is sent by the UE 102 to acknowledge establishment of a PDN connection.

**Table 5: PDN CONNECTIVITY Complete message content**

| **IEI** | **Information Element** | **Type/Reference** | **Presence** | **Format** | **Length** |
|---|---|---|---|---|---|
| | PDN connectivity complete | Message type | M | V | 1 |
| | | 8.2 | | | |
| | Procedure transaction identity | Transaction identifier | M | V | 1 |
| | | 8.3 | | | |
| | PDN connection ID | PDN connection ID | M | TV | 1 |
| | | 8.9 | | | |
| xx | WLCP Bearer identity | WLCP bearer identity | O | TV | 2 |
| | | 8.y | | | |

As shown, the UE 102 includes this IE to acknowledge usage of multiple bearer PDN connectivity if WLCP bearer identity was included in the PDN connectivity accept message.

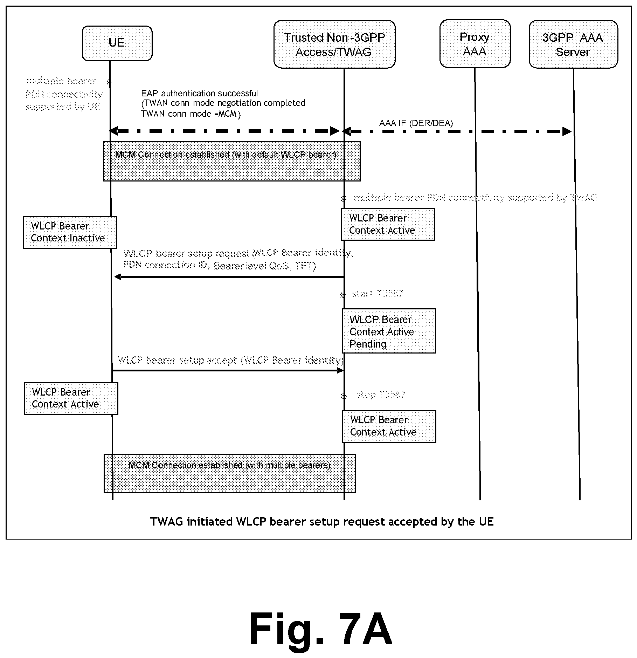

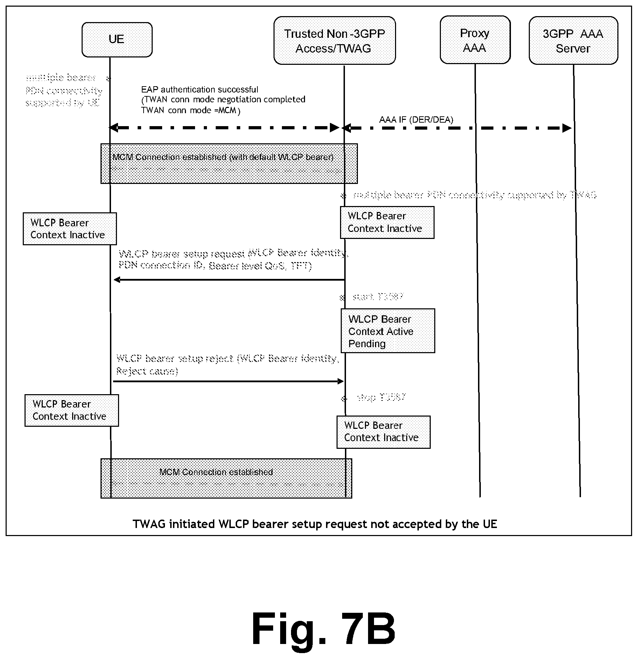

Figures 7A-7B illustrate end point flow diagrams for WLCP bearer setup, wherein Figure 7A represents an example underlying the invention, and Figure 7B represents an example for understanding the invention. The purpose of the WLCP bearer setup procedure is to establish a WLCP bearer with specific bearer level QoS and TFT between the UE 102 and the WLAN 104. The WLCP bearer setup procedure is initiated by the TWAG 106 if the UE 102 is connected to a trusted WLAN using the multi-connection mode (MCM); the TWAG 106 receives from the PDN GW a Create Bearer Request message that includes TFT and S2a bearer level QoS parameters; and/or both the UE 102 and the TWAG 106 support multiple bearer PDN connectivity and default WLCP bearer identity has been assigned during PDN connection establishment.

In an instant the WLCP bearer setup procedure is initiated by the TWAG 106, the TWAG 106 initiates the WLCP bearer setup procedure by sending a WLCP BEARER SETUP REQUEST message to the UE 102, starts the timer T3587, and enter the state WLCP BEARER CONTEXT ACTIVE PENDING as shown in Figure 6A.The TWAG 106 includes the PDN connection ID in the WLCP BEARER MODIFY REQUEST message to indicate the associated PDN connection for which the WLCP bearer is to be created.

Upon receipt of the WLCP BEARER SETUP REQUEST message, the UE 102 checks the received TFT before taking it into use, sends a WLCP BEARER SETUP ACCEPT message and enters the state WLCP BEARER CONTEXT ACTIVE. The WLCP BEARER SETUP ACCEPT message includes the WLCP bearer identity. The UE 102 uses the received TFT to apply mapping of uplink traffic flows to the WLCP bearer and treats any packet filter without explicit direction as being bi-directional.

Upon receipt of the WLCP BEARER SETUP ACCEPT message, the TWAG 106 stops the timer T3587 and enters the state WLCP BEARER CONTEXT ACTIVE, as shown in Figure 7A.

In another example, upon receipt of the WLCP BEARER SETUP REQUEST message, the UE 102 may reject the request from the TWAG 106 by sending a WLCP BEARER SETUP REJECT message. The UE 102 includes the WLCP bearer identity and cause the IE to indicate the reason for rejection in the WLCP BEARER SETUP REJECT message. Upon receipt of the WLCP BEARER SETUP REJECT message in state WLCP BEARER CONTEXT ACTIVE PENDING, the TWAG 106 aborts the WLCP bearer setup procedure, stops the timer T3587, if the timer is running, and enters the state WLCP BEARER CONTEXT INACTIVE, as shown in Figure 7B.

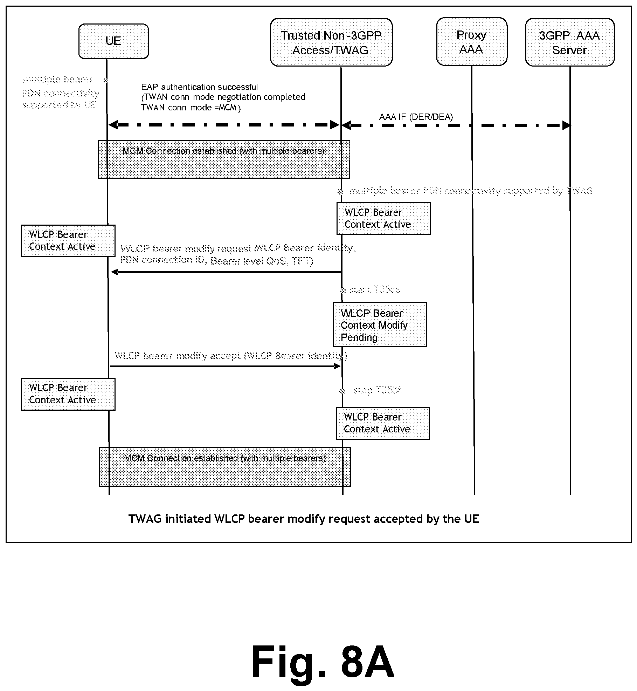

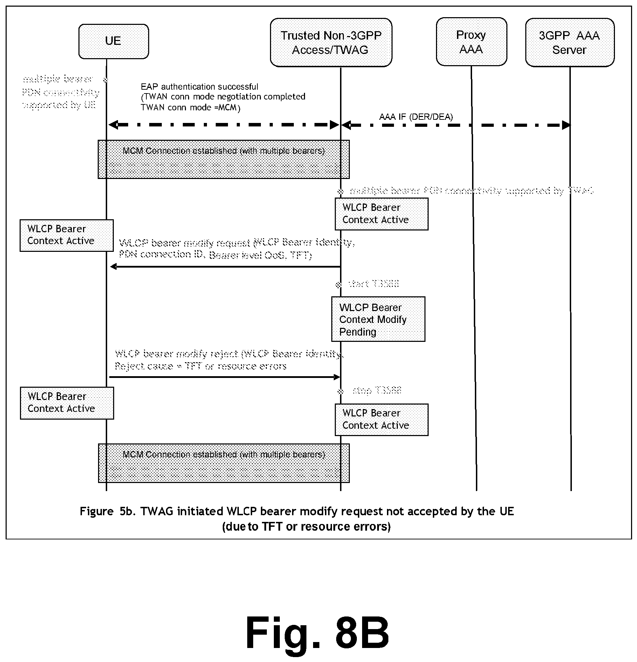

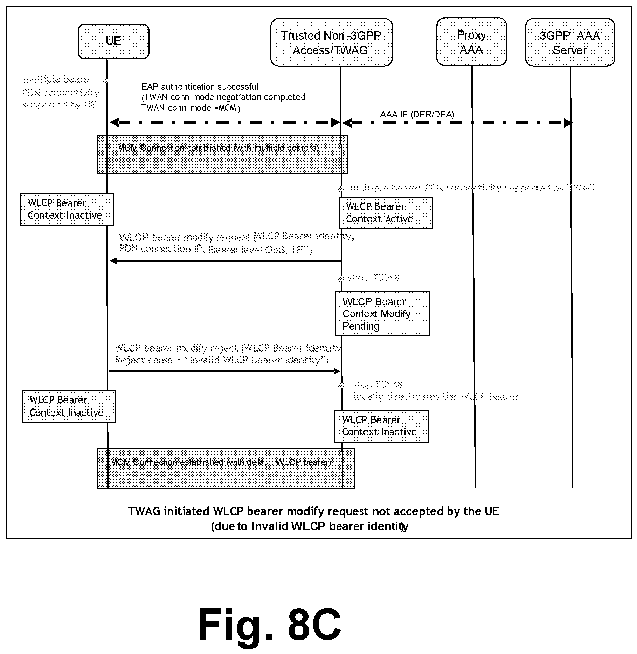

Figures 8A-8C illustrate end point flow diagrams for WLCP bearer modify requests, wherein Figure 8A represents an example for understanding the invention, and Figures 8B and 8C represent examples underlying the invention. The purpose of the WLCP bearer modify procedure is to modify a WLCP bearer context with specific bearer level QoS and TFT between the UE 102 and the WLAN 104 106. The WLCP bearer modify procedure is initiated by the TWAG 106 if the UE 102 is connected to a trusted WLAN 104 using the multi-connection mode (MCM); the TWAG 106 receives from the PDN-GW a Update Bearer Request message that includes TFT and updated S2a bearer level QoS parameters; and both the UE 102 and TWAG 106 support multiple bearer PDN connectivity and default WLCP bearer identity has been assigned during PDN connection establishment. In some examples, the WLCP bearer modify procedure is initiated by the TWAG. The TWAG 106 initiates the WLCP bearer modify procedure by sending a WLCP BEARER MODIFY REQUEST message to the UE 102, starts the timer T3588, and enters the state WLCP BEARER CONTEXT MODIFY PENDING. The TWAG includes the WLCP bearer identity and its associated PDN connection ID in the WLCP BEARER MODIFY REQUEST message to identify the WLCP bearer context to be modified.

In an example as shown in Figure 8A, upon receipt of the WLCP BEARER MODIFY REQUEST message, the UE 102 checks the received TFT before taking it into use, sends a WLCP BEARER MODIFY ACCEPT message and enter the state WLCP BEARER CONTEXT ACTIVE. The WLCP BEARER MODIFY ACCEPT message includes the WLCP bearer identity. The UE 102 uses the received TFT to apply mapping of uplink traffic flows to the WLCP bearer and treats any packet filter without explicit direction as being bi-directional. If the bearer level QoS parameter contained in WLCP BEARER MODIFY REQUEST message does not contain the Guaranteed Bit Rate (GBR) and the Maximum Bit Rate (MBR) values for uplink and downlink, and the WLCP bearer being modified is a GBR bearer, the UE 102 continues to use the previously received GBR and MBR values.

The UE 102 uses the received TFT to apply mapping of uplink traffic flows to the WLCP bearer if the TFT contains packet filters for the uplink direction. Upon receipt of the WLCP BEARER MODIFY ACCEPT message, the TWAG 106 stops the timer T3588 and enter the state WLCP BEARER CONTEXT ACTIVE, as shown in Figure 7A.

In another example as shown in Figures 8B-C, upon receipt of the WLCP BEARER MODIFY REQUEST message, the UE 102 may reject the request from the TWAG by sending a WLCP BEARER MODIFY REJECT message. The UE 102 includes the WLCP bearer identity and a cause IE indicating the reason for rejection in the WLCP BEARER MODIFY REJECT message.

Upon receipt of the WLCP BEARER MODIFY REJECT message with cause value other than "invalid WLCP bearer identity" (where this cause code is used by the TWAG 106 or the UE 102 to indicate that the WLCP bearer identity value provided to it is not a valid value for the received message or the PDN connection ID provided in the request is not active) in state BEARER CONTEXT MODIFY PENDING, the TWAG 106 aborts the WLCP bearer modify procedure, stops the timer T3588, if the timer is running, and enters the state WLCP BEARER CONTEXT ACTIVE. If the TWAG receives the WLCP BEARER MODIFY REJECT message with cause "invalid WLCP bearer identity." The TWAG 106 also locally deactivates the WLCP bearer without peer-to-peer signaling.

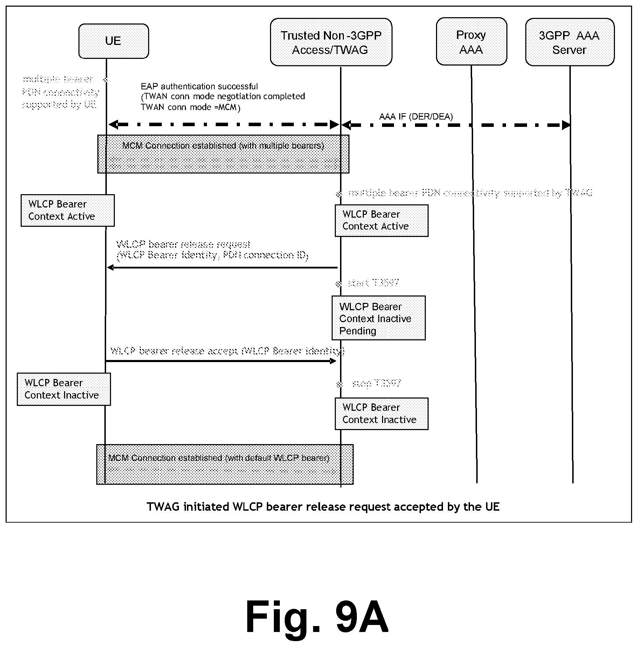

Figures 9A-9B illsutrate WLCP bearer release procedures. The purpose of the WLCP bearer release procedure is to release a WLCP bearer with specific QoS and TFT between the UE 102 and the WLAN 104. The WLCP bearer release procedure is initiated by the TWAG 106 if the UE 102 is connected to a trusted WLAN using the multi-connection mode (MCM); both the UE 102 and TWAG support multiple bearer PDN connectivity and default WLCP bearer identity has been assigned during PDN connection establishment; and the TWAG 106 receives from the PDN GW a Delete Bearer Request message that a WLCP bearer is to be released and the WLCP bearer to be released is not default WLCP bearer.

If the WLCP bearer to be released is a default WLCP bearer, the TWAG 106 invokes PDN disconnect procedure to disconnect the PDN connection and release all associated WLCP bearers.

In some examples, the TWAG 106 initiates the WLCP bearer release procedure by sending a WLCP BEARER RELEASE REQUEST message to the UE 102, starts the timer T3597, and enters the state WLCP BEARER CONTEXT INACTIVE PENDING. The WLCP BEARER RELEASE REQUEST message contains a cause typically indicating one of the following: #8 operator determined barring; #26 insufficient resources; #36 regular deactivation; or #38 network failure.

Upon receipt of the WLCP BEARER RELEASE REQUEST message, the UE 102 deletes the WLCP bearer identified by the WLCP bearer identity, sends a WLCP BEARER RELEASE ACCEPT message, and enters the state WLCP BEARER CONTEXT INACTIVE. The WLCP BEARER RELEASE ACCEPT message includes the WLCP bearer identity.

Furthermore, upon receipt of the WLCP BEARER RELEASE ACCEPT message, the TWAG 106 stops the timer T3597 and enters the state WLCP BEARER CONTEXT INACTIVE, as shown in Figure 9A.

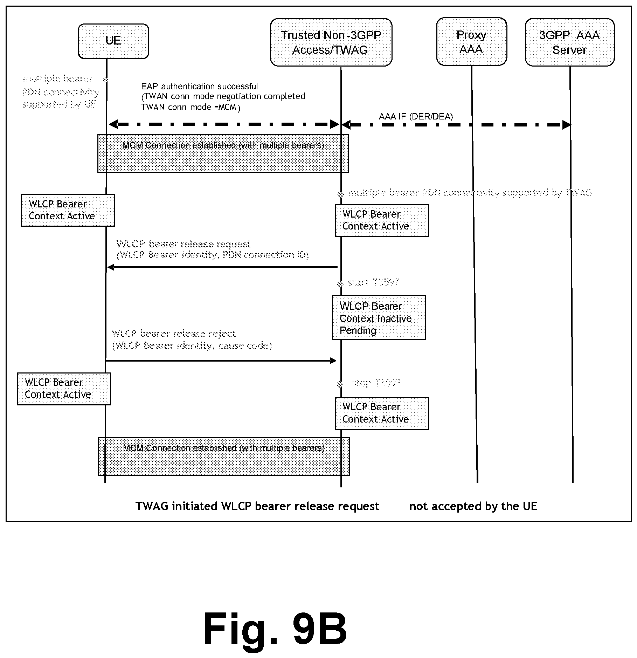

In another example, the WLCP bearer release procedure is not accepted by the UE 102, as shown in Figure 9B. Upon receipt of the WLCP BEARER RELEASE REQUEST message, the UE 102 may reject the request from the TWAG 106 by sending a WLCP BEARER RELEASE REJECT message. The UE 102 includes the WLCP bearer identity and a causes an IE indicating the reason for rejection in the WLCP BEARER RELEASE REJECT message.

Upon receipt of the WLCP BEARER RELEASE REJECT message in state WLCP BEARER CONTEXT INACTIVE PENDING, the TWAG 106 aborts the WLCP bearer release procedure, stops the timer T3597, if the timer is running, and enters the state WLCP BEARER CONTEXT INACTIVE.

As described above, the system 100 may include new WLCP Timers on TWAG 106 side. The following new WLCP timers include: T3587 - Wait for WLCP BEARER SETUP ACCEPT message, T3588 - Wait for WLCP BEARER MODIFY ACCEPT message, and T3597 - Wait for WLCP BEARER RELEASE ACCEPT message. Table 6A below shows the handlings of the timers :

**Table 6A: WLCP timers - TWAG side**

| **TIMER** | **TIMER VALUE** | **STATE** | **CAUSE OF START** | **NORMAL STOP** | **ON THE 1st, 2nd, 3rd, 4th EXPIRY (NOTE 1)** |
|---|---|---|---|---|---|
| T3587 | 8s | WLCP BEARER CONTEXT ACTIVE PENDING | WLCP BEARER SETUP REQUEST sent | WLCP BEARER SETUP ACCEPT received or WLCP BEARER SETUP REJECT received | Retransmission of the same message |
| T3588 | 8s | WLCP BEARER CONTEXT MODIFY PENDING | WLCP BEARER MODIFY REQUEST sent | WLCP BEARER MODIFY ACCEPT received or WLCP BEARER MODIFY REJECT received | Retransmission of the same message |
| T3597 | 8s | WLCP BEARER CONTEXT INACTIVE PENDING | WLCP BEARER RELEASE REQUEST sent | WLCP BEARER RELEASE ACCEPT received or WLCP BEARER RELEASE REJECT received | Retransmission of the same message |

As described above, the system 100 may include new WLCP Messages, as shown in Table 6B, including a WLCP bearer setup request, a WLCP bearer setup accept, a WLCP bearer setup reject, a WLCP bearer modify request, a WLCP bearer modify accept, a WLCP bearer modify reject, a WLCP bearer release request, a WLCP bearer release accept, and a WLCP bearer release reject. These are shown in Table 6B.

**Table 6B: Message types for WLCP**

| Bits | | | | | | | | |
|---|---|---|---|---|---|---|---|---|
| 7 | 6 | 5 | 4 | 3 | 2 | 1 | 0 | |
| 1 | 0 | - | - | - | - | - | - | WLCP messages |
| | | | | | | | | ..... |
| 1 | 0 | 0 | 1 | 0 | 0 | 0 | 1 | WLCP bearer setup request |
| 1 | 0 | 0 | 1 | 0 | 0 | 1 | 0 | WLCP bearer setup accept |
| 1 | 0 | 0 | 1 | 0 | 0 | 1 | 1 | WLCP bearer setup reject |
| 1 | 0 | 0 | 1 | 0 | 1 | 0 | 1 | WLCP bearer modify request |
| 1 | 0 | 0 | 1 | 0 | 1 | 1 | 0 | WLCP bearer modify accept |
| 1 | 0 | 0 | 1 | 0 | 1 | 1 | 1 | WLCP bearer modify reject |
| 1 | 0 | 0 | 1 | 1 | 0 | 0 | 1 | WLCP bearer release request |
| 1 | 0 | 0 | 1 | 1 | 0 | 1 | 0 | WLCP bearer release accept |
| 1 | 0 | 0 | 1 | 1 | 0 | 1 | 1 | WLCP bearer release reject |
| ...... | | | | | | | | |

Each of the messages are described further including the WLCP bearer setup procedure related messages which includes the Bearer setup request. This message is sent by the TWAG 106 to the UE 102 to request activation of a WLCP bearer for the given PDN connection as shown in Table 7.xx.1.1.

**Table 7.xx.1.1: BEARER SETUP REQUEST message content**

| **IEI** | **Information Element** | **Type/Reference** | **Presence** | **Format** | **Length** |
|---|---|---|---|---|---|
| | WLCP bearer setup request message identity | Message type | M | V | 1 |
| | | 8.2 | | | |
| | WLCP bearer identity | WLCP bearer identity | M | V | 1 |
| | | 8.y | | | |
| | PDN connection ID | PDN connection ID | M | V | 1 |
| | | 8.9 | | | |
| | QoS | EPS quality of service | M | LV | 2-14 |
| | | 8.yx | | | |
| | TFT | Traffic flow template | M | LV | 2-256 |
| | | 8. yy | | | |
| 27 | Protocol configuration options | Protocol configuration options | O | TLV | 3-253 |
| | | 8.7 | | | |
| | ... | | | | |

The Protocol configuration options are included in the message when the UE 102 or the network wishes to transmit (protocol) data (e.g. configuration parameters, error codes or messages/events) to the UE 102.

The WLCP bearer setup procedure related messages also includes bearer setup accept shown in Table 7.xy.1.1. This message is sent by the UE 102 to the TWAG to acknowledge activation of a WLCP bearer context associated with the given PDN connection ID.

**Table 7.xy.1.1: BEARER SETUP ACCEPT message content**

| **IEI** | **Information Element** | **Type/Reference** | **Presence** | **Format** | **Length** |
|---|---|---|---|---|---|
| | WLCP bearer setup accept message identity | Message type | M | V | 1 |
| | | 8.2 | | | |
| | Procedure transaction identity | Procedure transaction identity | M | V | 1 |
| | | 8.3 | | | |
| | WLCP bearer identity | WLCP bearer identity | M | V | 1 |
| | | 8. y | | | |
| 27 | Protocol configuration options | Protocol configuration options | O | TLV | 3-253 |
| | | 8.7 | | | |
| | ... | | | | |

Protocol configuration options are included in the message when the UE 102 or the network wishes to transmit (protocol) data (e.g. configuration parameters, error codes or messages/events) to the UE 102.

The WLCP bearer setup procedure related messages also includes Bearer setup reject shown in Table 7.xz.1.1. This message is sent by the UE 102 to the TWAG to reject creation of a WLCP bearer for the given PDN connection..

**Table 7.xz.1.1: BEARER SETUP REJECT message content**

| **IEI** | **Information Element** | **Type/Reference** | **Presence** | **Format** | **Length** |
|---|---|---|---|---|---|
| | WLCP bearer setup reject message identity | Message type | M | V | 1 |
| | | 8.2 | | | |
| | Procedure transaction identity | Procedure transaction identity | M | V | 1 |
| | | 8.3 | | | |
| | WLCP bearer identity | WLCP bearer identity | M | V | 1 |
| | | 8.v | | | |
| | Cause | Cause | M | V | 1 |
| | | 8.11 | | | |
| 27 | Protocol configuration options | Protocol configuration options | O | TLV | 3-253 |
| | | 8.7 | | | |
| | ... | | | | |

Protocol configuration options are included in the message when the UE 102 or the network wishes to transmit (protocol) data (e.g. configuration parameters, error codes or messages/events) to the UE 102.

The WLCP bearer modify procedure related messages include a bearer modify request as shown in Table 7.yx.1.1. This message is sent by the TWAG to the UE 102 to request activation of a WLCP bearer for the given PDN connection.

**Table 7.yx.1.1: BEARER MODIFY REQUEST message content**

| **IEI** | **Information Element** | **Type/Reference** | **Presence** | **Format** | **Length** |
|---|---|---|---|---|---|
| | WLCP bearer modify request message identity | Message type | M | V | 1 |
| | | 8.2 | | | |
| | Procedure transaction identity | Procedure transaction identity | M | V | 1 |
| | | 8.3 | | | |
| | WLCP bearer identity | WLCP bearer identity | M | V | 1 |
| | | 8.y | | | |
| | PDN connection ID | PDN connection ID | M | V | 1 |
| | | 8.9 | | | |
| | TFT | Traffic flow template | M | LV | 2-256 |
| | | 8.yy | | | |
| | Bearer QoS | WLCP quality of service | M | LV | 2-14 |
| | | 8.yx | | | |
| 58 | Cause | Cause | M | TV | 2 |
| | | 8.11 | | | |
| 27 | Protocol configuration options | Protocol configuration options | O | TLV | 3-253 |
| | | 8.7 | | | |
| | ... | | | | |

The Bearer QoS is included in the message when the TWAG requests a change of QoS for the indicated traffic flows.

Protocol configuration options are included in the message when the UE 102 or the network wishes to transmit (protocol) data (e.g. configuration parameters, error codes or messages/events) to the UE 102.

The WLCP bearer modify procedure related messages also include bearer modify accept as shown in Table 7.yy.1.1. This message is sent by the UE 102 to the TWAG to acknowledge activation of a WLCP bearer context associated with the given PDN connection ID.

**Table 7.yy.1.1: BEARER MODIFY ACCEPT message content**

| **IEI** | **Information Element** | **Type/Reference** | **Presence** | **Format** | **Length** |
|---|---|---|---|---|---|
| | WLCP bearer modify accept message identity | Message type | M | V | 1 |
| | | 8.2 | | | |
| | Procedure transaction identity | Procedure transaction identity | M | V | 1 |
| | | 8.3 | | | |
| | WLCP bearer identity | WLCP bearer identity | M | V | 1 |
| | | 8.v | | | |
| 27 | Protocol configuration options | Protocol configuration options | O | TLV | 3-253 |
| | | 8.7 | | | |
| | ... | | | | |

Protocol configuration options are included in the message when the UE 102 or the network wishes to transmit (protocol) data (e.g. configuration parameters, error codes or messages/events) to the UE 102.

The WLCP bearer modify procedure related messages also include bearer modify reject as shown in Table 7.yz.1.1. This message is sent by the UE 102 to the TWAG to reject creation of a WLCP bearer for the given PDN connection..

**Table 7.yz.1.1: BEARER MODIFY REJECT message content**

| **IEI** | **Information Element** | **Type/Reference** | **Presence** | **Format** | **Length** |
|---|---|---|---|---|---|
| | WLCP bearer modify reject message identity | Message type | M | V | 1 |
| | | 8.2 | | | |
| | Procedure transaction identity | Procedure transaction identity | M | V | 1 |
| | | 8.3 | | | |
| | WLCP bearer identity | WLCP bearer identity | M | V | 1 |
| | | 8.v | | | |
| | Cause | Cause | M | V | 1 |
| | | 8.11 | | | |
| 27 | Protocol configuration options | Protocol configuration options | O | TLV | 3-253 |
| | | 8.7 | | | |
| | ... | | | | |

Protocol configuration options are included in the message when the UE 102 or the network wishes to transmit (protocol) data (e.g. configuration parameters, error codes or messages/events) to the UE 102.

The WLCP bearer release procedure related messages include a bearer release request as shown in Table 7.zx.1.1. This message is sent by the TWAG to the UE 102 to request activation of a WLCP bearer for the given PDN connection.

**Table 7.zx.1.1: BEARER RELEASE REQUEST message content**

| **IEI** | **Information Element** | **Type/Reference** | **Presence** | **Format** | **Length** |
|---|---|---|---|---|---|
| | WLCP bearer release request message identity | Message type | M | V | 1 |
| | | 8.2 | | | |
| | Procedure transaction identity | Procedure transaction identity | M | V | 1 |
| | | 8.3 | | | |
| | WLCP bearer identity | WLCP bearer identity | M | V | 1 |
| | | 8.v | | | |
| | PDN connection ID | PDN connection ID | M | V | 1 |
| | | 8.9 | | | |
| 27 | Protocol configuration options | Protocol configuration options | O | TLV | 3-253 |
| | | 8.7 | | | |
| | ... | | | | |

Protocol configuration options are included in the message when the UE 102 or the network wishes to transmit (protocol) data (e.g. configuration parameters, error codes or messages/events) to the UE 102.

The WLCP bearer release procedure related messages also include bearer release accept as shown in Table 7.zy.1.1. This message is sent by the UE 102 to the TWAG to acknowledge activation of a WLCP bearer context associated with the given PDN connection ID.

**Table 7.zy.1.1: BEARER RELEASE ACCEPT message content**

| **IEI** | **Information Element** | **Type/Reference** | **Presence** | **Format** | **Length** |
|---|---|---|---|---|---|
| | WLCP bearer release accept message identity | Message type | M | V | 1 |
| | | 8.2 | | | |
| | Procedure transaction identity | Procedure transaction identity | M | V | 1 |
| | | 8.3 | | | |
| | WLCP bearer identity | WLCP bearer identity | M | V | 1 |
| | | 8.v | | | |
| 27 | Protocol configuration options | Protocol configuration options | O | TLV | 3-253 |
| | | 8.7 | | | |
| | ... | | | | |

Protocol configuration options are included in the message when the UE 102 or the network wishes to transmit (protocol) data (e.g. configuration parameters, error codes or messages/events) to the UE 102.

The WLCP bearer release procedure related messages also include bearer release reject as shown in Table 7.zz.1.1. This message is sent by the UE 102 to the TWAG to reject creation of a WLCP bearer for the given PDN connection.

**Table 7.zz.1.1: BEARER RELEASE REJECT message content**

| **IEI** | **Information Element** | **Type/Reference** | **Presence** | **Format** | **Length** |
|---|---|---|---|---|---|
| | WLCP bearer release reject message identity | Message type | M | V | 1 |
| | | 8.2 | | | |
| | Procedure transaction identity | Procedure transaction identity | M | V | 1 |
| | | 8.3 | | | |
| | WLCP bearer identity | WLCP bearer identity y | M | V | 1 |
| | | 8. | | | |
| | Cause | Cause | M | V | 1 |
| | | 8.11 | | | |
| 27 | Protocol configuration options | Protocol configuration options | O | TLV | 3-253 |
| | | 8.7 | | | |
| | ... | | | | |

Protocol configuration options are included in the message when the UE 102 or the network wishes to transmit (protocol) data (e.g. configuration parameters, error codes or messages/events) to the UE 102.

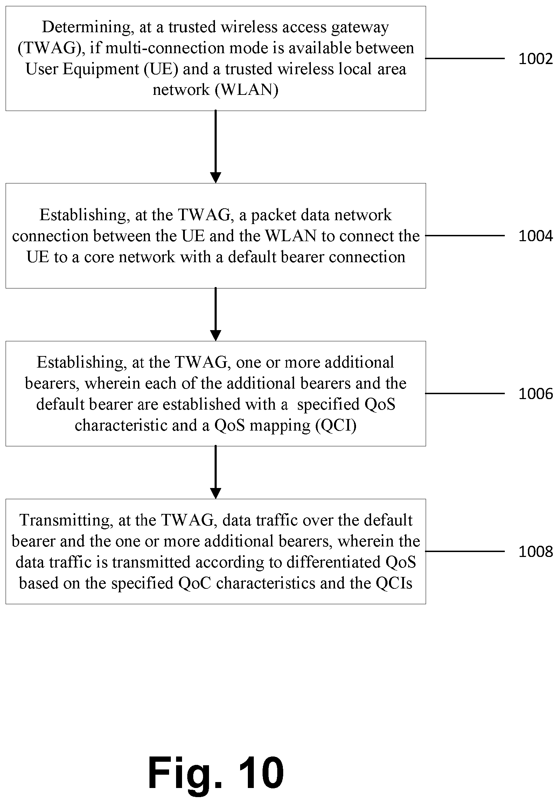

Referring now to Figure 10, the operations performed, such as by the WLAN 104 of Figure 3 embodied by or in association with processing circuitry 300, are illustrated in order to provide for the quality of service (QoS) differentiation. As shown in block 1002 of Figure 10, the apparatus of this example embodiment includes means, such as the processing circuitry 300, the processor 302 or the like, for determining, at a trusted wireless access gateway (TWAG), such as TWAG 106, if multi-connection mode is available between User Equipment (UE) and a trusted wireless local area network (WLAN).

As shown in block 1004 of Figure 10, the apparatus of this example embodiment includes means, such as the processing circuitry 300, the processor 302 or the like, for establishing, at the TWAG, a packet data network connection between the UE 102 and the WLAN to connect the UE 102 to a core network with a default bearer connection.

As shown in block 1006 of Figure 10, the apparatus of this example embodiment includes means, such as the processing circuitry 300, the processor 302 or the like, for establishing, at the TWAG, one or more additional bearers, wherein each of the additional bearers and the default bearer are established with a specified QoS characteristic and a QoS mapping (QCI).

As shown in block 1008 of Figure 10, the apparatus of this example embodiment includes means, such as the processing circuitry 300, the processor 302 or the like, for transmitting, at the TWAG, data traffic over the default bearer and the one or more additional bearers, wherein the data traffic is transmitted according to differentiated QoS based on the specified QoS characteristics and the QCIs.

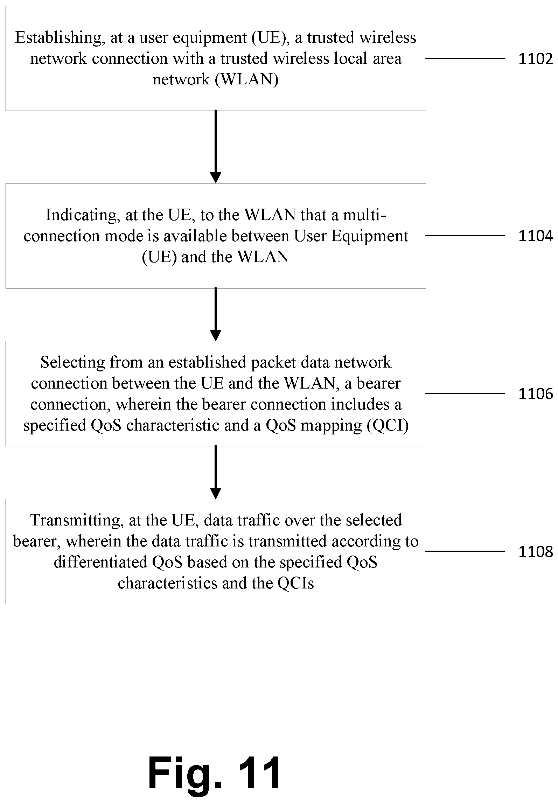

Referring now to Figure 11, the operations performed, such as by the UE 102 of Figure 2 embodied by or in association with processing circuitry 200, are illustrated in order to provide for the quality of service (QoS) differentiation. As shown in block 1102 of Figure 11, the apparatus of this example embodiment includes means, such as the processing circuitry 200, the processor 202 or the like, for establishing, at a user equipment (UE), a trusted wireless network connection with a trusted wireless local area network (WLAN).

As shown in block 1104 of Figure 11, the apparatus of this example embodiment includes means, such as the processing circuitry 200, the processor 202 or the like, for Indicating, at the UE, to the WLAN that a multi-connection mode is available between User Equipment (UE) and the WLAN.

As shown in block 1106 of Figure 11, the apparatus of this example embodiment includes means, such as the processing circuitry 200, the processor 202 or the like, for Selecting from an established packet data network connection between the UE and the WLAN, a bearer connection, wherein the bearer connection includes a specified QoS characteristic and a QoS mapping (QCI).

As shown in block 1108 of Figure 11, the apparatus of this example embodiment includes means, such as the processing circuitry 200, the processor 202 or the like, for Transmitting, at the UE, data traffic over the selected bearer, wherein the data traffic is transmitted according to differentiated QoS based on the specified QoS characteristics and the QCIs.

Many modifications and other embodiments of the present invention set forth herein will come to mind to one skilled in the art to which the present invention pertains having the benefit of the teachings presented in the foregoing descriptions and the associated drawings. Therefore, it is to be understood that the present invention is not to be limited to the specific embodiments disclosed and that modifications and other embodiments are intended to be included within the scope of the present invention as defined by the appended claims. Although specific terms are employed herein, they are used in a generic and descriptive sense only and not for purposes of limitation.

## Claims

1. A method of a trusted wireless local area network access gateway (106) for quality of service differentiation via a trusted wireless local area network (104), the method comprising:
receiving, from a user equipment (102), a packet data network connectivity request including an indication that the user equipment supports Wireless Local Area Network Control Plane multiple bearer packet data network connectivity;
determining (1002), based on the indication, that multi-connection mode is available between the user equipment and the trusted wireless local area network;
establishing (1004) a packet data network connection between the user equipment and the trusted wireless local area network to connect the user equipment to a core network (108) with a default bearer;
establishing (1006) one or more additional bearers, wherein each of the additional bearers and the default bearer are established with a quality of service characteristic and a quality of service mapping; and
causing (1008) data traffic to be transmitted over the default bearer and the one or more additional bearers, wherein the data traffic is caused to be transmitted according to a differentiated quality of service based on the quality of service characteristic and the quality of service mapping,
wherein the method further comprises a bearer modify procedure comprising:
transmitting, to the user equipment, a bearer modify request, including a bearer identity of a bearer to be modified,
wherein the method is **characterized in that**:
the bearer modify procedure further comprises:
receiving, from the user equipment, as a response to the bearer modify request, a bearer modify reject message which includes the bearer identity and a cause value indicating a reason for rejection of the bearer modify request, wherein the cause value indicates whether or not an invalid bearer identity is the reason for rejection, wherein
upon receipt of the bearer modify reject message with the cause value indicating that an invalid bearer identity is not the reason for rejection, the trusted wireless local area network access gateway (106) aborts the bearer modify procedure, or
upon receipt of the bearer modify reject message with the cause value indicating that an invalid bearer identity is the reason for rejection, the trusted wireless local area network access gateway (106) locally deactivates the bearer.

2. The method of Claim 1, wherein
the default bearer remains established for a duration of the packet data network connection, and
the one or more additional bearers remain established for the duration of the packet data network connection or remain established for a time less than the duration of the packet data network connection.

3. The method of any of Claims 1 or 2, wherein
the default bearer and the one or more additional bearers comprise wireless local area network control plane bearers, and
the default bearer and the one or more additional bearers are established using wireless local area network control plane procedures.

4. The method of any of Claims 1 to 3, wherein
one or more core network bearers are connected between the trusted wireless access gateway and the core network, and
the one or more additional bearers are mapped on a one to one basis with the one or more core network bearers.

5. The method of any of Claims 1 to 4, wherein the data traffic is caused to be transmitted on a bearer based upon a traffic flow template.

6. The method of any of Claims 1 to 5, further comprising:
starting a modify timer;
causing a request to modify a bearer to be transmitted to the user equipment;
determining that the modify timer has expired a first time;
causing the request to modify the bearer to be retransmitted;
determining that the modify timer has expired a subsequent time; and
continuing use of the bearer or initiating a request to release the bearer.

7. The method of any of Claims 1 to 6, further comprising:
starting a release timer;
causing a request to release a bearer to be transmitted to the user equipment;
determining that the release timer has expired a first time;
causing the request to release the bearer to be retransmitted;
determining that the release timer has expired a subsequent time; and
deactivating the bearer at a trusted wireless access gateway.

8. The method of any of Claims 1 to 7, further comprising:
receiving a packet data network disconnect request from the user equipment; and
terminating the packet data network connection.

9. An apparatus of a trusted wireless local area network access gateway (106) for quality of service differentiation via a trusted wireless local area network (104), the apparatus comprising:
means (306) for receiving, from a user equipment (102), a packet data network connectivity request including an indication that the user equipment supports Wireless Local Area Network Control Plane multiple bearer packet data network connectivity;
means (300) for determining, based on the indication, that multi-connection mode is available between the user equipment and the trusted wireless local area network;
means (300) for establishing a packet data network connection between the user equipment and the trusted wireless local area network to connect the user equipment to a core network (108) with a default bearer;
means (300) for establishing one or more additional bearers, wherein each of the additional bearers and the default bearer are established with a quality of service characteristic and a quality of service mapping;
means (306) for transmitting data traffic over the default bearer and the one or more additional bearers, wherein the data traffic is transmitted according to a differentiated quality of service based on the quality of service characteristic and the quality of service mapping,
wherein the apparatus further comprises means (300) for performing a bearer modify procedure comprising:
transmitting, to the user equipment, a bearer modify request, including a bearer identity of a bearer to be modified,
wherein the apparatus is **characterized in that**:
the bearer modify procedure comprises:
receiving, from the user equipment, as a response to the bearer modify request, a bearer modify reject message which includes the bearer identity and a cause value indicating a reason for rejection of the bearer modify request, wherein the cause value indicates whether or not an invalid bearer identity is the reason for rejection, wherein
the trusted wireless local area network access gateway (106) further comprises means (300) for, upon receipt of the bearer modify reject message with the cause value indicating that an invalid bearer identity is not the reason for rejection, aborting the bearer modify procedure, and
the trusted wireless local area network access gateway (106) further comprises means (300) for, upon receipt of the bearer modify reject message with the cause value indicating that an invalid bearer identity is the reason for rejection, locally deactivating the bearer.

10. A method of a user equipment (102) for quality of service differentiation via a trusted wireless local area network (104), the method comprising:
establishing (1002) a trusted wireless network connection with the trusted wireless local area network;
indicating (1104) to the trusted wireless local area network that a multi-connection mode is available between the user equipment and the trusted wireless local area network, by transmitting, to a trusted wireless local area network access gateway (106), a packet data network connectivity request including an indication that the user equipment supports Wireless Local Area Network Control Plane multiple bearer packet data network connectivity;
selecting (1106) a bearer from an established packet data network connection between the user equipment and the trusted wireless local area network, for which a default bearer and one or more additional bearers are established, wherein each of the additional bearers and the default bearer are established with a quality of service characteristic and a quality of service mapping; and
causing (1108) data traffic to be transmitted over the selected bearer, wherein the data traffic is caused to be transmitted according to differentiated quality of service based on the quality of service characteristic and the quality of service mapping,
wherein the method further comprises a bearer modify procedure comprising:
receiving, from the trusted wireless local area network access gateway, a bearer modify request, including a bearer identity of a bearer to be modified,
wherein the method is **characterized in that**:
the bearer modify procedure comprises:
transmitting, to the trusted wireless local area network access gateway, as a response to the bearer modify request, a bearer modify reject message which includes the bearer identity and a cause value indicating a reason for rejection of the bearer modify request, wherein the cause value indicates whether or not an invalid bearer identity is the reason for rejection, wherein
upon rejection of the bearer modify request for the reason being not an invalid bearer identity, the bearer modify reject message is transmitted with the cause value indicating that an invalid bearer identity is not the reason for rejection, or
upon rejection of the bearer modify request for the reason being an invalid bearer identity, the bearer modify reject message is transmitted with the cause value indicating that an invalid bearer identity is the reason for rejection.

11. The method of Claim 10, wherein selecting the bearer further comprises:
selecting the bearer using a traffic flow template.

12. The method of any of Claims 10 or 11, further comprising:
receiving a bearer connection deactivation request;
determining the bearer connection deactivation request comprises a request to deactivate a default bearer connection; and
initiating a packet data network disconnection procedure.

13. The method of any of Claims 10 to 12, further comprising:
receiving a bearer connection setup request;
determining an error in the bearer connection setup request; and
causing an error message to be transmitted to the trusted wireless local area network.

14. The method of Claim 13, wherein the error comprises one or more of a non-existent packet date network identification, a request for an active default bearer connection, or a request for an active dedicated bearer connection.

15. The method of any of Claims 10 to 14, further comprising:
causing a packet data network disconnect request to be transmitted to the trusted wireless local area network; and
terminating the packet data network connection.

16. An apparatus of a user equipment (102) for quality of service differentiation via a trusted wireless local area network (104), the apparatus comprising:
means (200) for establishing a trusted wireless network connection with the trusted wireless local area network;
means (208) for indicating to the trusted wireless local area network that a multi-connection mode is available between the user equipment and the trusted wireless local area network, by transmitting, to a trusted wireless local area network access gateway (106), a packet data network connectivity request including an indication that the user equipment supports Wireless Local Area Network Control Plane multiple bearer packet data network connectivity;
means (200) for selecting a bearer from an established packet data network connection between the user equipment and the trusted wireless local area network, for which a default bearer and one or more additional bearers are established, wherein each of the additional bearers and the default bearer are established with a quality of service characteristic and a quality of service mapping; and
means (208) for transmitting data traffic over the selected bearer, wherein the data traffic is transmitted according to differentiated quality of service based on the quality of service characteristic and the quality of service mapping,
wherein the apparatus further comprises means (200) for performing a bearer modify procedure comprising:
receiving, from the trusted wireless local area network access gateway, a bearer modify request, including a bearer identity of a bearer to be modified,
wherein the apparatus is **characterized in that**:
the bearer modify procedure comprises:
transmitting, to the trusted wireless local area network access gateway, as a response to the bearer modify request, a bearer modify reject message which includes the bearer identity and a cause value indicating a reason for rejection of the bearer modify request, wherein the cause value indicates whether or not an invalid bearer identity is the reason for rejection, wherein
the user equipment further comprises means (200) for, upon rejection of the bearer modify request for the reason being not an invalid bearer identity, transmitting the bearer modify reject message with the cause value indicating that an invalid bearer identity is not the reason for rejection, and
the user equipment further comprises means (200) for, upon rejection of the bearer modify request for the reason being an invalid bearer identity, transmitting the bearer modify reject message with the cause value indicating that an invalid bearer identity is the reason for rejection.

17. A non-transitory computer-readable storage medium for quality of service differentiation via a trusted wireless local area network, the non-transitory computer-readable storage medium storing program code instructions that, when executed, cause an apparatus to perform the method of any of Claims 1 to 8 or 10 to 15.

## Patentansprüche

1. Verfahren eines Zugangsgateways (106) für ein vertrauenswürdiges drahtloses lokales Netzwerk zur Dienstqualitätsdifferenzierung via ein vertrauenswürdiges drahtloses lokales Netzwerk (104), wobei das Verfahren Folgendes umfasst:
Empfangen einer Paketdatennetzwerkkonnektivitätsanforderung, die eine Anzeige beinhaltet, dass eine Teilnehmereinrichtung eine Mehrträgerpaketdatennetzwerkkonnektivität für die Steuerebene eines drahtlosen lokalen Netzwerks unterstützt, von der Teilnehmereinrichtung (102);
Bestimmen (1002) auf Basis der Anzeige, dass zwischen der Teilnehmereinrichtung und dem vertrauenswürdigen drahtlosen lokalen Netzwerk ein Mehrverbindungsmodus verfügbar ist;
Einrichten (1004) einer Paketdatennetzwerkverbindung zwischen der Teilnehmereinrichtung und dem vertrauenswürdigen drahtlosen lokalen Netzwerk, um die Teilnehmereinrichtung mit einem Standardträger mit einem Kernnetzwerk (108) zu verbinden;
Einrichten (1006) von einem oder mehreren zusätzlichen Trägern, wobei jeder der zusätzlichen Träger und der Standardträger mit einem Dienstqualitätscharakteristikum und einer Dienstqualitätszuordnung eingerichtet werden; und
Bewirken (1008), dass Datenverkehr über den Standardträger und den einen oder die mehreren zusätzlichen Träger übertragen wird, wobei bewirkt wird, dass der Datenverkehr auf Basis des Dienstqualitätscharakteristikums und der Dienstqualitätszuordnung gemäß einer differenzierten Dienstqualität übertragen wird,
wobei das Verfahren ferner eine Trägermodifikationsprozedur umfasst, die Folgendes umfasst:
Übertragen einer Trägermodifikationsanforderung, die eine Trägeridentität eines zu modifizierenden Trägers beinhaltet, zur Teilnehmereinrichtung,
wobei das Verfahren **dadurch gekennzeichnet ist, dass**:
die Trägermodifikationsprozedur ferner Folgendes umfasst:
Empfangen einer Trägermodifikationszurückweisungsnachricht, die die Trägeridentität sowie einen Ursachenwert beinhaltet, der einen Grund für die Zurückweisung der Trägermodifikationsanforderung anzeigt, von der Teilnehmereinrichtung als eine Antwort auf die Trägermodifikationsanforderung, wobei der Ursachenwert anzeigt, ob eine ungültige Trägeridentität der Grund für die Zurückweisung ist oder nicht, wobei
das Zugangsgateway (106) für ein vertrauenswürdiges drahtloses lokales Netzwerk nach Empfang der Trägermodifikationszurückweisungsnachricht mit dem Ursachenwert, der anzeigt, dass eine ungültige Trägeridentität nicht der Grund für die Zurückweisung ist, die Trägermodifikationsprozedur abbricht, oder
das Zugangsgateway (106) für ein vertrauenswürdiges drahtloses lokales Netzwerk nach Empfang der Trägermodifikationszurückweisungsnachricht mit dem Ursachenwert, der anzeigt, dass eine ungültige Trägeridentität der Grund für die Zurückweisung ist, den Träger lokal deaktiviert.

2. Verfahren nach Anspruch 1, wobei
der Standardträger für eine Dauer der Paketdatennetzwerkverbindung eingerichtet bleibt, und
der eine oder die mehreren zusätzlichen Träger für die Dauer der Paketdatennetzwerkverbindung eingerichtet bleiben oder für eine Zeit, die kürzer ist als die Dauer der Paketdatennetzwerkverbindung, eingerichtet bleiben.

3. Verfahren nach einem der Ansprüche 1 oder 2, wobei
der Standardträger und der eine oder die mehreren zusätzlichen Träger Träger für die Steuerebene eines drahtlosen lokalen Netzwerks umfassen, und
der Standardträger und der eine oder die mehreren zusätzlichen Träger unter Verwendung von Steuerebenenprozeduren für ein drahtloses lokales Netzwerk eingerichtet werden.

4. Verfahren nach einem der Ansprüche 1 bis 3, wobei
zwischen dem vertrauenswürdigen drahtlosen Zugangsgateway und dem Kernnetzwerk ein oder mehrere Kernnetzwerkträger verbunden sind, und
der eine oder die mehreren zusätzlichen Träger dem einen oder den mehreren Kernnetzwerkträgern auf einer Eins-zu-eins-Basis zugeordnet sind.

5. Verfahren nach einem der Ansprüche 1 bis 4, wobei bewirkt wird, dass der Datenverkehr auf Basis einer Verkehrsflussvorlage auf einem Träger übertragen wird.

6. Verfahren nach einem der Ansprüche 1 bis 5, das ferner Folgendes umfasst:
Starten eines Modifikationstimers;
Bewirken, dass eine Anforderung zur Modifikation eines Trägers zur Teilnehmereinrichtung übertragen wird;
Bestimmen, dass der Modifikationstimer ein erstes Mal abgelaufen ist;
Bewirken, dass die Anforderung zur Modifikation des Trägers erneut übertragen wird;
Bestimmen, dass der Modifikationstimer ein nächstes Mal abgelaufen ist; und
Fortsetzen der Verwendung des Trägers oder Initiieren einer Anforderung zur Freigabe des Trägers.

7. Verfahren nach einem der Ansprüche 1 bis 6, das ferner Folgendes umfasst:
Starten eines Freigabetimers;
Bewirken, dass eine Anforderung zur Freigabe eines Trägers zur Teilnehmereinrichtung übertragen wird;
Bestimmen, dass der Freigabetimer ein erstes Mal abgelaufen ist;
Bewirken, dass die Anforderung zur Freigabe des Trägers erneut übertragen wird;
Bestimmen, dass der Freigabetimer ein nächstes Mal abgelaufen ist; und
Deaktivieren des Trägers an einem vertrauenswürdigen drahtlosen Zugangsgateway.

8. Verfahren nach einem der Ansprüche 1 bis 7, das ferner Folgendes umfasst:
Empfangen einer Paketdatennetzwerktrennungsanforderung von der Teilnehmereinrichtung; und
Beenden der Paketdatennetzwerkverbindung.

9. Vorrichtung eines Zugangsgateways (106) für ein vertrauenswürdiges drahtloses lokales Netzwerk zur Dienstqualitätsdifferenzierung via ein vertrauenswürdiges drahtloses lokales Netzwerk (104), wobei die Vorrichtung Folgendes umfasst:
Mittel (306) zum Empfangen einer Paketdatennetzwerkkonnektivitätsanforderung, die eine Anzeige beinhaltet, dass eine Teilnehmereinrichtung eine Mehrträgerpaketdatennetzwerkkonnektivität für die Steuerebene eines drahtlosen lokalen Netzwerks unterstützt, von der Teilnehmereinrichtung (102);
Mittel (300) zum Bestimmen auf Basis der Anzeige, dass zwischen der Teilnehmereinrichtung und dem vertrauenswürdigen drahtlosen lokalen Netzwerk ein Mehrverbindungsmodus verfügbar ist;
Mittel (300) zum Einrichten einer Paketdatennetzwerkverbindung zwischen der Teilnehmereinrichtung und dem vertrauenswürdigen drahtlosen lokalen Netzwerk, um die Teilnehmereinrichtung mit einem Standardträger mit einem Kernnetzwerk (108) zu verbinden;
Mittel (300) zum Einrichten von einem oder mehreren zusätzlichen Trägern, wobei jeder der zusätzlichen Träger und der Standardträger mit einem Dienstqualitätscharakteristikum und einer Dienstqualitätszuordnung eingerichtet werden;
Mittel (306) zum Übertragen von Datenverkehr über den Standardträger und den einen oder die mehreren zusätzlichen Träger, wobei der Datenverkehr auf Basis des Dienstqualitätscharakteristikums und der Dienstqualitätszuordnung gemäß einer differenzierten Dienstqualität übertragen wird,
wobei die Vorrichtung ferner Mittel (300) zum Durchführen einer Trägermodifikationsprozedur umfasst, die Folgendes umfasst:
Übertragen einer Trägermodifikationsanforderung, die eine Trägeridentität eines zu modifizierenden Trägers beinhaltet, zur Teilnehmereinrichtung,
wobei die Vorrichtung **dadurch gekennzeichnet ist, dass**:
die Trägermodifikationsprozedur Folgendes umfasst:
Empfangen einer Trägermodifikationszurückweisungsnachricht, die die Trägeridentität sowie einen Ursachenwert beinhaltet, der einen Grund für die Zurückweisung der Trägermodifikationsanforderung anzeigt, von der Teilnehmereinrichtung als eine Antwort auf die Trägermodifikationsanforderung, wobei der Ursachenwert anzeigt, ob eine ungültige Trägeridentität der Grund für die Zurückweisung ist oder nicht, wobei
das Zugangsgateway (106) für ein vertrauenswürdiges drahtloses lokales Netzwerk ferner Mittel (300) zum Abbrechen der Trägermodifikationsprozedur umfasst, nachdem die Trägermodifikationszurückweisungsnachricht mit dem Ursachenwert, der anzeigt, dass eine ungültige Trägeridentität nicht der Grund für die Zurückweisung ist, empfangen wurde, und
das Zugangsgateway (106) für ein vertrauenswürdiges drahtloses lokales Netzwerk ferner Mittel (300) zum lokalen Deaktivieren des Trägers umfasst, nachdem die Trägermodifikationszurückweisungsnachricht mit dem Ursachenwert, der anzeigt, dass eine ungültige Trägeridentität der Grund für die Zurückweisung ist, empfangen wurde.

10. Verfahren einer Teilnehmereinrichtung (102) zur Dienstqualitätsdifferenzierung via ein vertrauenswürdiges drahtloses lokales Netzwerk (104), wobei das Verfahren Folgendes umfasst:
Einrichten (1002) einer vertrauenswürdigen drahtlosen Netzwerkverbindung mit dem vertrauenswürdigen drahtlosen lokalen Netzwerk;
Anzeigen (1104) für das vertrauenswürdige drahtlose lokale Netzwerk, dass zwischen der Teilnehmereinrichtung und dem vertrauenswürdigen drahtlosen lokalen Netzwerk ein Mehrverbindungsmodus verfügbar ist, durch Übertragen einer Paketdatennetzwerkkonnektivitätsanforderung, die eine Anzeige beinhaltet, dass eine Teilnehmereinrichtung eine Mehrträgerpaketdatennetzwerkkonnektivität für die Steuerebene eines drahtlosen lokalen Netzwerks unterstützt, zu einem Zugangsgateway (106) eines vertrauenswürdigen drahtlosen lokalen Netzwerks;
Auswählen (1106) eines Trägers aus einer eingerichteten Paketdatennetzwerkverbindung zwischen der Teilnehmereinrichtung und dem vertrauenswürdigen drahtlosen lokalen Netzwerk, für die ein Standardträger und eine oder mehrere zusätzliche Träger eingerichtet werden, wobei jeder der zusätzlichen Träger und der Standardträger mit einem Dienstqualitätscharakteristikum und einer Dienstqualitätszuordnung eingerichtet werden; und
Bewirken (1108), dass Datenverkehr über den ausgewählten Träger übertragen wird, wobei bewirkt wird, dass der Datenverkehr auf Basis des Dienstqualitätscharakteristikums und der Dienstqualitätszuordnung gemäß einer differenzierten Dienstqualität übertragen wird,
wobei das Verfahren ferner eine Trägermodifikationsprozedur umfasst, die Folgendes umfasst:
Empfangen einer Trägermodifikationsanforderung, die eine Trägeridentität eines zu modifizierenden Trägers beinhaltet, vom Zugangsgateway für ein vertrauenswürdiges drahtloses lokales Netzwerk,
wobei das Verfahren **dadurch gekennzeichnet ist, dass**:
die Trägermodifikationsprozedur Folgendes umfasst:
Übertragen einer Trägermodifikationszurückweisungsnachricht, die die Trägeridentität sowie einen Ursachenwert beinhaltet, der einen Grund für die Zurückweisung der Trägermodifikationsanforderung anzeigt, zum Zugangsgateway für ein vertrauenswürdiges drahtloses lokales Netzwerk als eine Antwort auf die Trägermodifikationsanforderung, wobei der Ursachenwert anzeigt, ob eine ungültige Trägeridentität der Grund für die Zurückweisung ist oder nicht, wobei
nach Zurückweisung der Trägermodifikationsanforderung aus dem Grund, dass keine ungültige Trägeridentität vorliegt, die Trägermodifikationszurückweisungsnachricht mit dem Ursachenwert, der anzeigt, dass eine ungültige Trägeridentität nicht der Grund für die Zurückweisung ist, übertragen wird, oder
nach Zurückweisung der Trägermodifikationsanforderung aus dem Grund, dass eine ungültige Trägeridentität vorliegt, die Trägermodifikationszurückweisungsnachricht mit dem Ursachenwert, der anzeigt, dass eine ungültige Trägeridentität der Grund für die Zurückweisung ist, übertragen wird.

11. Verfahren nach Anspruch 10, wobei das Auswählen des Trägers Folgendes umfasst:
Auswählen des Trägers unter Verwendung einer Verkehrsflussvorlage.

12. Verfahren nach einem der Ansprüche 10 oder 11, das ferner Folgendes umfasst:
Empfangen einer Trägerverbindungsdeaktivierungsanforderung;
Bestimmen, dass die Trägerverbindungsdeaktivierungsanforderung eine Anforderung zum Deaktivieren einer Standardträgerverbindung umfasst; und
Initiieren einer Paketdatennetzwerktrennungsprozedur.

13. Verfahren nach einem der Ansprüche 10 bis 12, das ferner Folgendes umfasst:
Empfangen einer Trägerverbindungsaufbauanforderung;
Bestimmen eines Fehlers in der Trägerverbindungsaufbauanforderung; und
Bewirken, dass eine Fehlernachricht zum vertrauenswürdigen drahtlosen lokalen Netzwerk übertragen wird.

14. Verfahren nach Anspruch 13, wobei der Fehler eines oder mehreres von einer nicht existierenden Paketdatennetzwerkidentifikation, einer Anforderung einer aktiven Standardträgerverbindung oder einer Anforderung einer aktiven dedizierten Trägerverbindung umfasst.

15. Verfahren nach einem der Ansprüche 10 bis 14, das ferner Folgendes umfasst:
Bewirken, dass eine Paketdatennetzwerktrennungsanforderung zum vertrauenswürdigen drahtlosen lokalen Netzwerk übertragen wird; und
Beenden der Paketdatennetzwerkverbindung.

16. Vorrichtung einer Teilnehmereinrichtung (102) zur Dienstqualitätsdifferenzierung via ein vertrauenswürdiges drahtloses lokales Netzwerk (104), wobei die Vorrichtung Folgendes umfasst:
Mittel (200) zum Einrichten einer vertrauenswürdigen drahtlosen Netzwerkverbindung mit dem vertrauenswürdigen drahtlosen lokalen Netzwerk;
Mittel (208) zum Anzeigen für das vertrauenswürdige drahtlose lokale Netzwerk, das zwischen der Teilnehmereinrichtung und dem vertrauenswürdigen drahtlosen lokalen Netzwerk ein Mehrverbindungsmodus verfügbar ist, durch Übertragen einer Paketdatennetzwerkkonnektivitätsanforderung, die eine Anzeige beinhaltet, dass eine Teilnehmereinrichtung eine Mehrträgerpaketdatennetzwerkkonnektivität für die Steuerebene eines drahtlosen lokalen Netzwerks unterstützt, zu einem Zugangsgateway (106) eines vertrauenswürdigen drahtlosen lokalen Netzwerks;
Mittel (200) zum Auswählen eines Trägers aus einer eingerichteten Paketdatennetzwerkverbindung zwischen der Teilnehmereinrichtung und dem vertrauenswürdigen drahtlosen lokalen Netzwerk, für die ein Standardträger und eine oder mehrere zusätzliche Träger eingerichtet werden, wobei jeder der zusätzlichen Träger und der Standardträger mit einem Dienstqualitätscharakteristikum und einer Dienstqualitätszuordnung eingerichtet werden; und
Mittel (208) zum Übertragen von Datenverkehr über den ausgewählten Träger, wobei der Datenverkehr auf Basis des Dienstqualitätscharakteristikums und der Dienstqualitätszuordnung gemäß einer differenzierten Dienstqualität übertragen wird,
wobei die Vorrichtung ferner Mittel (200) zum Durchführen einer Trägermodifikationsprozedur umfasst, die Folgendes umfasst:
Empfangen einer Trägermodifikationsanforderung, die eine Trägeridentität eines zu modifizierenden Trägers beinhaltet, vom Zugangsgateway für ein vertrauenswürdiges drahtloses lokales Netzwerk,
wobei die Vorrichtung **dadurch gekennzeichnet ist, dass**:
die Trägermodifikationsprozedur Folgendes umfasst:
Übertragen einer Trägermodifikationszurückweisungsnachricht, die die Trägeridentität sowie einen Ursachenwert beinhaltet, der einen Grund für die Zurückweisung der Trägermodifikationsanforderung anzeigt, zum Zugangsgateway für ein vertrauenswürdiges drahtloses lokales Netzwerk als eine Antwort auf die Trägermodifikationsanforderung, wobei der Ursachenwert anzeigt, ob eine ungültige Trägeridentität der Grund für die Zurückweisung ist oder nicht, wobei
wobei die Teilnehmereinrichtung ferner Mittel (200) zum Übertragen der Trägermodifikationszurückweisungsnachricht mit dem Ursachenwert, der anzeigt, dass eine ungültige Trägeridentität nicht der Grund für die Zurückweisung ist, nachdem die Trägermodifikationsanforderung aus dem Grund zurückgewiesen wurde, dass keine ungültige Trägeridentität vorliegt, umfasst, und
wobei die Teilnehmereinrichtung ferner Mittel (200) zum Übertragen der Trägermodifikationszurückweisungsnachricht mit dem Ursachenwert, der anzeigt, dass eine ungültige Trägeridentität der Grund für die Zurückweisung ist, nachdem die Trägermodifikationsanforderung aus dem Grund zurückgewiesen wurde, dass eine ungültige Trägeridentität vorliegt, umfasst.

17. Nichttransitorisches computerlesbares Speichermedium für eine Dienstqualitätsdifferenzierung via ein vertrauenswürdiges drahtloses lokales Netzwerk, wobei das nichttransitorische computerlesbare Speichermedium Programmcodeanweisungen umfasst, die, wenn sie ausgeführt werden, bewirken, dass eine Vorrichtung das Verfahren nach einem der Ansprüche 1 bis 8 oder 10 bis 15 durchführt.

## Revendications

1. Procédé d'une passerelle d'accès au réseau local sans fil de confiance (106) pour une différenciation de qualité de service via un réseau local sans fil de confiance (104), le procédé comprenant :
la réception, d'un équipement utilisateur (102), d'une demande de connectivité de réseau de données par paquets comportant une indication selon laquelle l'équipement utilisateur prend en charge une connectivité de réseau de données par paquets à supports multiples de plan de contrôle de réseau local sans fil ;
la détermination (1002), sur la base de l'indication, du fait que le mode de connexion multiple est disponible entre l'équipement utilisateur et le réseau local sans fil de confiance ;
l'établissement (1004) d'une connexion de réseau de données par paquets entre l'équipement utilisateur et le réseau local sans fil de confiance pour connecter l'équipement utilisateur à un réseau central (108) avec un support par défaut ;
l'établissement (1006) d'un ou plusieurs supports supplémentaires, dans lequel chacun parmi les supports supplémentaires et le support par défaut est établi avec une caractéristique de qualité de service et un mappage de qualité de service ; et
la provocation (1008) de la transmission d'un trafic de données sur le support par défaut et les un ou plusieurs supports supplémentaires, dans lequel le trafic de données est amené à être transmis selon une qualité de service différenciée basée sur la caractéristique de qualité de service et le mappage de qualité de service,
dans lequel le procédé comprend en outre une procédure de modification de support comprenant :
la transmission, à l'équipement utilisateur, d'une demande de modification de support comportant une identité de support d'un support à modifier,
dans lequel le procédé est **caractérisé en ce que** :
la procédure de modification de support comprend en outre :
la réception, de l'équipement utilisateur, en réponse à la demande de modification de support, d'un message de rejet de modification de support qui comporte l'identité de support et une valeur de cause indiquant une raison du rejet de la demande de modification de support, dans lequel la valeur de cause indique si une identité de support non valide est ou non la raison du rejet, dans lequel
à la réception du message de rejet de modification de support où la valeur de cause indique qu'une identité de support non valide n'est pas la raison du rejet, la passerelle d'accès au réseau local sans fil de confiance (106) abandonne la procédure de modification de support, ou
à la réception du message de rejet de modification de support où la valeur de cause indique qu'une identité de support non valide est la raison du rejet, la passerelle d'accès au réseau local sans fil de confiance (106) désactive localement le support.

2. Procédé selon la revendication 1, dans lequel
le support par défaut reste établi pendant une durée de la connexion de réseau de données par paquets, et
les un ou plusieurs supports supplémentaires restent établis pendant la durée de la connexion de réseau de données par paquets ou restent établis pendant un temps inférieur à la durée de la connexion de réseau de données par paquets.

3. Procédé selon l'une des revendications 1 ou 2, dans lequel
le support par défaut et les un ou plusieurs supports supplémentaires comprennent des supports de plan de contrôle de réseau local sans fil, et
le support par défaut et les un ou plusieurs supports supplémentaires sont établis en utilisant des procédures de plan de contrôle de réseau local sans fil.

4. Procédé selon l'une des revendications 1 à 3, dans lequel
un ou plusieurs supports de réseau central sont connectés entre la passerelle d'accès sans fil de confiance et le réseau central, et
les un ou plusieurs supports supplémentaires sont mappés sur une base de un à un aux un ou plusieurs supports de réseau central.

5. Procédé selon l'une des revendications 1 à 4, dans lequel le trafic de données est amené à être transmis sur un support en fonction d'un modèle de flux de trafic.

6. Procédé selon l'une des revendications 1 à 5, comprenant en outre :
le démarrage d'un temporisateur de modification ;
la provocation de la transmission d'une demande de modification d'un support à l'équipement utilisateur ;
la détermination du fait que le temporisateur de modification a expiré une première fois ;
la provocation de la retransmission de la demande de modification du support ;
la détermination du fait que le temporisateur de modification a expiré une seconde fois ; et
la poursuite de l'utilisation du support ou l'introduction d'une demande de libération du support.

7. Procédé selon l'une des revendications 1 à 6, comprenant en outre :
le démarrage d'un temporisateur de libération ;
la provocation de la transmission d'une demande de libération d'un support à l'équipement utilisateur ;
la détermination du fait que le temporisateur de libération a expiré une première fois ;
la provocation de la retransmission de la demande de libération du support ;
la détermination du fait que le temporisateur de libération a expiré une seconde fois ; et
la désactivation du support au niveau d'une passerelle d'accès sans fil de confiance.

8. Procédé selon l'une des revendications 1 à 7, comprenant en outre :
la réception d'une demande de déconnexion de réseau de données par paquets de l'équipement utilisateur ; et
la fin de la connexion de réseau de données par paquets.

9. Appareil d'une passerelle d'accès au réseau local sans fil de confiance (106) pour une différenciation de qualité de service via un réseau local sans fil de confiance (104), l'appareil comprenant :
des moyens (306) pour recevoir, d'un équipement utilisateur (102), une demande de connectivité de réseau de données par paquets comportant une indication selon laquelle l'équipement utilisateur prend en charge une connectivité de réseau de données par paquets à supports multiples de plan de contrôle de réseau local sans fil ;
des moyens (300) pour déterminer, sur la base de l'indication, qu'un mode de connexion multiple est disponible entre l'équipement utilisateur et le réseau local sans fil de confiance ;
des moyens (300) pour établir une connexion de réseau de données par paquets entre l'équipement utilisateur et le réseau local sans fil de confiance pour connecter l'équipement utilisateur à un réseau central (108) avec un support par défaut ;
des moyens (300) pour établir un ou plusieurs supports supplémentaires, dans lequel chacun parmi les supports supplémentaires et le support par défaut est établi avec une caractéristique de qualité de service et un mappage de qualité de service ;
des moyens (306) pour transmettre un trafic de données sur le support par défaut et les un ou plusieurs supports supplémentaires, dans lequel le trafic de données est transmis selon une qualité de service différenciée basée sur la caractéristique de qualité de service et le mappage de qualité de service,
dans lequel l'appareil comprend en outre des moyens (300) pour réaliser une procédure de modification de support comprenant :
la transmission, à l'équipement utilisateur, d'une demande de modification de support comportant une identité de support d'un support à modifier,
dans lequel l'appareil est **caractérisé en ce que** :
la procédure de modification de support comprend :
la réception, de l'équipement utilisateur, en réponse à la demande de modification de support, d'un message de rejet de modification de support qui comporte l'identité de support et une valeur de cause indiquant une raison du rejet de la demande de modification de support, dans lequel la valeur de cause indique si une identité de support non valide est ou non la raison du rejet, dans lequel
la passerelle d'accès au réseau local sans fil de confiance (106) comprend en outre des moyens (300) pour, à la réception du message de rejet de modification de support où la valeur de cause indique qu'une identité de support non valide n'est pas la raison du rejet, abandonner la procédure de modification de support, et
la passerelle d'accès au réseau local sans fil de confiance (106) comprend en outre des moyens (300) pour, à la réception du message de rejet de modification de support où la valeur de cause indique qu'une identité de support non valide est la raison du rejet, désactiver localement le support.

10. Procédé d'un équipement utilisateur (102) pour une différenciation de qualité de service via un réseau local sans fil de confiance (104), le procédé comprenant :
l'établissement (1002) d'une connexion de réseau sans fil de confiance avec le réseau local sans fil de confiance ;
l'indication (1104) au réseau local sans fil de confiance qu'un mode de connexion multiple est disponible entre l'équipement utilisateur et le réseau local sans fil de confiance, en transmettant à une passerelle d'accès au réseau local sans fil de confiance (106) une demande de connectivité de réseau de données par paquets comportant une indication selon laquelle l'équipement utilisateur prend en charge une connectivité de réseau de données par paquets à supports multiples de plan de contrôle de réseau local sans fil ;
la sélection (1106) d'un support dans une connexion de réseau de données par paquets établie entre l'équipement utilisateur et le réseau local sans fil de confiance pour laquelle un support par défaut et un ou plusieurs supports supplémentaires sont établis, dans lequel chacun parmi les supports supplémentaires et le support par défaut est établi avec une caractéristique de qualité de service et un mappage de qualité de service ; et
la provocation (1108) de la transmission d'un trafic de données sur le support sélectionné, dans lequel le trafic de données est amené à être transmis selon une qualité de service différenciée basée sur la caractéristique de qualité de service et le mappage de qualité de service,
dans lequel le procédé comprend en outre une procédure de modification de support comprenant :
la réception, de la passerelle d'accès au réseau local sans fil de confiance, d'une demande de modification de support comportant une identité de support d'un support à modifier,
dans lequel le procédé est **caractérisé en ce que** :
la procédure de modification de support comprend :
la transmission, à la passerelle d'accès au réseau local sans fil de confiance, en réponse à la demande de modification de support, d'un message de rejet de modification de support qui comporte l'identité de support et une valeur de cause indiquant une raison du rejet de la demande de modification de support, dans lequel la valeur de cause indique si une identité de support non valide est ou non la raison du rejet, dans lequel
en cas de rejet de la demande de modification de support n'ayant pas pour raison une identité de support non valide, le message de rejet de modification de support est transmis avec la valeur de cause indiquant qu'une identité de support non valide n'est pas la raison du rejet, ou
en cas de rejet de la demande de modification de support ayant pour raison une identité de support non valide, le message de rejet de modification de support est transmis avec la valeur de cause indiquant qu'une identité de support non valide est la raison du rejet.

11. Procédé selon la revendication 10, dans lequel la sélection du support comprend en outre :
la sélection du support en utilisant un modèle de flux de trafic.

12. Procédé selon l'une des revendications 10 ou 11, comprenant en outre :
la réception d'une demande de désactivation de connexion au support ;
la détermination du fait que la demande de désactivation de connexion au support comprend une demande de désactivation d'une connexion au support par défaut ; et
l'initiation d'une procédure de déconnexion de réseau de données par paquets.

13. Procédé selon l'une des revendications 10 à 12, comprenant en outre :
la réception d'une demande de configuration de connexion au support ;
la détermination d'une erreur dans la demande de configuration de connexion au support ; et
la provocation de la transmission d'un message d'erreur au réseau local sans fil de confiance.

14. Procédé selon la revendication 13, dans lequel l'erreur comprend une ou plusieurs parmi une identification de réseau de date de paquet inexistante, une demande de connexion active de support par défaut, ou une demande de connexion active au support dédiée.

15. Procédé selon l'une des revendications 10 à 14, comprenant en outre :
la provocation de la transmission d'une demande de déconnexion de réseau de données par paquets au réseau local sans fil de confiance ; et
la fin de la connexion de réseau de données par paquets.

16. Appareil d'un équipement utilisateur (102) pour une différenciation de qualité de service via un réseau local sans fil de confiance (104), l'appareil comprenant :
des moyens (200) pour établir une connexion de réseau sans fil de confiance avec le réseau local sans fil de confiance ;
des moyens (208) pour indiquer au réseau local sans fil de confiance qu'un mode de connexion multiple est disponible entre l'équipement utilisateur et le réseau local sans fil de confiance, en transmettant à une passerelle d'accès au réseau local sans fil de confiance (106) une demande de connectivité de réseau de données par paquets comportant une indication selon laquelle l'équipement utilisateur prend en charge une connectivité de réseau de données par paquets à supports multiples de plan de contrôle de réseau local sans fil ;
des moyens (200) pour sélectionner un support dans une connexion de réseau de données par paquets établie entre l'équipement utilisateur et le réseau local sans fil de confiance pour laquelle un support par défaut et un ou plusieurs supports supplémentaires sont établis, dans lequel chacun parmi les supports supplémentaires et le support par défaut est établi avec une caractéristique de qualité de service et un mappage de qualité de service ; et
des moyens (208) pour transmettre un trafic de données sur le support sélectionné, dans lequel le trafic de données est transmis selon une qualité de service différenciée basée sur la caractéristique de qualité de service et le mappage de qualité de service.
dans lequel l'appareil comprend en outre des moyens (200) pour réaliser une procédure de modification de support comprenant :
la réception, de la passerelle d'accès au réseau local sans fil de confiance, d'une demande de modification de support comportant une identité de support d'un support à modifier,
dans lequel l'appareil est **caractérisé en ce que** :
la procédure de modification de support comprend :
la transmission, à la passerelle d'accès au réseau local sans fil de confiance, en réponse à la demande de modification de support, d'un message de rejet de modification de support qui comporte l'identité de support et une valeur de cause indiquant une raison du rejet de la demande de modification de support, dans lequel la valeur de cause indique si une identité de support non valide est ou non la raison du rejet, dans lequel
l'équipement utilisateur comprend en outre des moyens (200) pour, en cas de rejet de la demande de modification de support n'ayant pas pour raison une identité de support non valide, transmettre le message de rejet de modification de support où la valeur de cause indique qu'une identité de support non valide n'est pas la raison du rejet, et
l'équipement utilisateur comprend en outre des moyens (200) pour, en cas de rejet de la demande de modification de support ayant pour raison une identité de support non valide, transmettre le message de rejet de modification de support où la valeur de cause indique qu'une identité de support non valide est la raison du rejet.

17. Support de stockage non transitoire lisible par ordinateur pour une différenciation de qualité de service via un réseau local sans fil de confiance, le support de stockage non transitoire lisible par ordinateur stockant des instructions de code de programme qui, lorsqu'elles sont exécutées, amènent un appareil à réaliser le procédé selon l'une des revendications 1 à 8 ou 10 à 15.
